(19) Europäisches Patentamt
European Patent Office
Office européen des brevets

(11) EP 4 567 052 A1

(12) **EUROPEAN PATENT APPLICATION**
published in accordance with Art. 153(4) EPC

(43) Date of publication:
**11.06.2025 Bulletin 2025/24**

(21) Application number: **23850177.9**

(22) Date of filing: **04.08.2023**

(51) International Patent Classification (IPC):
***C08F 8/42*** *(2006.01)* ***B60C 1/00*** *(2006.01)*
***C08K 3/04*** *(2006.01)* ***C08K 3/36*** *(2006.01)*
***C08L 15/00*** *(2006.01)*

(52) Cooperative Patent Classification (CPC):
**B60C 1/00; C08F 8/42; C08K 3/04; C08K 3/36; C08L 15/00;** Y02T 10/86

(86) International application number:
**PCT/JP2023/028595**

(87) International publication number:
**WO 2024/029624 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.08.2022 JP 2022125827**

(71) Applicant: **ENEOS Materials Corporation**
**Tokyo 105-7109 (JP)**

(72) Inventors:
- **FUJIWARA, Keisuke**
**Tokyo 105-7109 (JP)**
- **NAKAMORI, Harutaka**
**Tokyo 105-7109 (JP)**
- **FAN, Weijia**
**Tokyo 105-7109 (JP)**
- **YONEKURA, Keita**
**Tokyo 105-7109 (JP)**
- **MATSUMOTO, Shoichi**
**Tokyo 105-7109 (JP)**

(74) Representative: **TBK**
**Bavariaring 4-6**
**80336 München (DE)**

(54) **MODIFIED CONJUGATED DIENE POLYMER AND METHOD FOR PRODUCING SAME, POLYMER COMPOSITION, CROSSLINKED PRODUCT, AND TIRE**

(57) A modified conjugated diene polymer that contains a structural unit derived from a conjugated diene compound and a structural unit derived from an aromatic vinyl compound, in which, when the glass transition temperature measured in accordance with JIS K 6240:2011 is taken as $Tg_r$ (unit: K) and the glass transition temperature determined by formula (1) is taken as $Tg_{cl}$ (unit: K), $Tg_r$ and $Tg_{cl}$ satisfy the relationship of formula (2). $W_{Ar}$ is the mass fraction of structural units derived from aromatic vinyl compounds in the modified conjugated diene polymer and satisfies $0 \leq W_{Ar} \leq 1$.

$$\frac{1}{Tg_{c1}} = \frac{W_{Ar}}{380} + \frac{1-W_{Ar}}{188} \qquad \cdots (1)$$

$$Tg_r - Tg_{c1} \leq -6.0 \qquad \cdots (2)$$

EP 4 567 052 A1

## Description

Technical Field

[Cross-Reference to Related Applications]

This application claims priority based on Japanese Patent Application No. 2022-125827 filed on August 5, 2022, the entire contents of which are incorporated herein by reference.

The disclosure relates to a modified conjugated diene polymer and a method for producing the same, as well as a polymer composition, a crosslinked product, and a tire.

Related Art

Conjugated diene polymers obtained by polymerization using conjugated diene compounds are good in various characteristics such as heat resistance, wear resistance, mechanical strength, and molding workability, and are thus widely used in various industrial products such as pneumatic tires, vibration-resistant rubber, and hoses.

For a polymer composition that may be used for manufacturing a tread, sidewall or the like of a pneumatic tire, in order to improve the durability or wear resistance of the product, it is known to blend a filler such as carbon black or silica together with a conjugated diene polymer. Conventionally, to enhance the affinity between a conjugated diene polymer and a filler, a modified conjugated diene polymer obtained by modifying the conjugated diene polymer with a compound containing silicon or nitrogen has been used (see, for example, Patent Documents 1 to 3).

Prior-Art Documents

Patent Documents

Patent Document 1: WO 2008/123164
Patent Document 2: Japanese Patent Laid-open No. H11-349632
Patent Document 3: WO 2017/221943

SUMMARY OF THE INVENTION

Problems to Be Solved by the Invention

Due to environmental circumstances, increased awareness of resource and energy conservation, rising consumer demands for safety and so on in recent years, for rubber for automobile tires, a material exhibiting a well-balanced improvement in various performance characteristics such as wet grip performance (that is, wet road safety), wear resistance, and strength has been desired more than before.

The disclosure is made in view of the above problem, and a main object thereof is to provide a modified conjugated diene polymer that can yield a crosslinked product exhibiting excellent wet grip performance and wear resistance as well as high strength.

Means for Solving the Problems

According to the disclosure, provided are the following modified conjugated diene polymer and a method for producing the same, as well as a polymer composition, a crosslinked product, and a tire.

[1] A modified conjugated diene polymer containing: a structural unit derived from a conjugated diene compound; and a structural unit derived from an aromatic vinyl compound, in which, in the case where a glass transition temperature measured in accordance with JIS K 6240:2011 is taken as $Tg_r$ (unit: K) and a glass transition temperature obtained by formula (1) is taken as $Tg_{cl}$ (unit: K), $Tg_r$ and $Tg_{cl}$ satisfy a relationship of formula (2).

[Math 1]

$$\frac{1}{Tg_{c1}} = \frac{W_{Ar}}{380} + \frac{1-W_{Ar}}{188} \quad \cdots (1)$$

$$Tg_r - Tg_{c1} \leq -6.0 \quad \cdots (2)$$

(In formula (1), $W_{Ar}$ is a mass fraction of a structural unit derived from an aromatic vinyl compound in the modified conjugated diene polymer and satisfies $0 \leq W_{Ar} \leq 1$.)

[2] A polymer composition containing: the modified conjugated diene polymer as described in [1]; and at least one filler selected from a group consisting of silica and carbon black.

[3] A crosslinked product obtained by crosslinking the polymer composition as described in [2].

[4] A tire, in which a tread, a sidewall, or both are formed using the polymer composition as described in [2].

[5] A method for producing the modified conjugated diene polymer as described in [1], including: a polymerization process in which a monomer containing a conjugated diene compound and an aromatic vinyl compound is polymerized in the presence of at least one polymerization initiator selected from a group consisting of an alkali metal compound and an alkaline earth metal compound, and a potassium compound (excluding the polymerization initiator). In the polymerization process, polymerization is initiated with a portion of a total amount of the conjugated diene compound used for polymerization as an initially charged portion, and the remaining conjugated diene compound is added over a predetermined time during polymerization to continue the polymerization.

Effects of the Invention

According to the modified conjugated diene polymer of the disclosure, a crosslinked product exhibiting excellent wet grip performance and wear resistance as well as high strength can be obtained.

DESCRIPTION OF THE EMBODIMENTS

The following describes in detail matters related to the aspects of the disclosure. It should be understood that the disclosure is not limited to the embodiments described below, but includes various modifications implemented without changing the gist of the disclosure. In the present specification, a numerical range described as "X to Y" represents a numerical range that includes a numerical value X as a lower limit and a numerical value Y as an upper limit. The description "(meth)acrylic acid" is a concept including both "acrylic acid" and "methacrylic acid".

<<Modified Conjugated Diene Polymer>>

A modified conjugated diene polymer (hereinafter also referred to as "modified copolymer (P)") of the disclosure is a polymer in which a functional group for modifying a conjugated diene polymer is introduced into one or more of a terminal portion, a side chain portion, and a branching point portion of a molecular chain in a conjugated diene polymer containing a structural unit derived from a conjugated diene compound and a structural unit derived from an aromatic vinyl compound. The term "functional group" refers to a group having a specific structure (specifically, a structure containing a hetero atom) within a molecule of an organic compound, and refers to an atomic group or bonding mode that characterizes the compound.

Examples of the conjugated diene compound constituting the modified copolymer (P) include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, and 2-chloro-1,3-butadiene. Among them, 1,3-butadiene, isoprene, or 2,3-dimethyl-1,3-butadiene is preferable. The conjugated diene compound constituting the modified copolymer (P) may be one of them or two or more of them.

Examples of the aromatic vinyl compound constituting the modified copolymer (P) include styrene, 2-methylstyrene, 3-methylstyrene, 4-methylstyrene, α-methylstyrene, 2,4-dimethylstyrene, 2,4-diisopropylstyrene, 5-t-butyl-2-methylstyrene, vinylethylbenzene, divinylbenzene, trivinylbenzene, divinylnaphthalene, t-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinylpyridine, diphenylethylene, and tertiary amino group-containing diphenylethylene (for example, 1-(4-N,N-dimethylaminophenyl)-1-phenylethylene). Among them, styrene or α-methylstyrene is preferable as the aromatic vinyl compound. The aromatic vinyl compound constituting the modified copolymer (P) may be one of them or two or more of them.

In the case of obtaining a polymer composition in which the modified copolymer (P) is blended with a filler (particularly silica), from the viewpoint of improving the dispersibility of the filler, preferably, the modified copolymer (P) has a partial structure derived from a compound (hereinafter also referred to as "modifying compound") having one or more elements (hereinafter also referred to as "specific elements") selected from a group consisting of nitrogen, silicon, sulfur, oxygen and phosphorus. The modifying compound may be a compound (hereinafter also referred to as "initiating terminal modifying agent") capable of introducing a functional group having a specific element to a polymerization initiating terminal, or may be a compound (hereinafter also referred to as "terminal modifying agent") capable of introducing a functional group having a specific element to a polymerization terminating terminal. The modifying compound may be a monomer (hereinafter also referred to as "modifying monomer") capable of introducing a functional group having a specific element to a side chain of a molecular chain. In terms of being highly effective in improving the dispersibility of the filler, the modifying compound is preferably at least one selected from a group consisting of the initiating terminal modifying agent and the terminal modifying agent, and more preferably contains the terminal modifying agent.

In the case where the modified copolymer (P) has a glass transition temperature measured in accordance with JIS K 6240:2011 of $Tg_r$ (unit: K) and a glass transition temperature obtained by formula (1) of $Tg_{cl}$ (unit: K), $Tg_r$ and $Tg_{cl}$ satisfy a relationship of formula (2).

[Math 2]

$$\frac{1}{Tg_{c1}} = \frac{W_{Ar}}{380} + \frac{1-W_{Ar}}{188} \qquad \cdots (1)$$

$$Tg_r - Tg_{c1} \leqq -6.0 \qquad \cdots (2)$$

(In formula (1), $W_{Ar}$ is a mass fraction of a structural unit derived from an aromatic vinyl compound in the modified conjugated diene polymer and satisfies $0 \leq W_{Ar} \leq 1$.)

Preferably, the modified copolymer (P) has an endothermic peak in a temperature range of -100 °C to 20 °C in differential scanning calorimetry (DSC) in accordance with JIS K 6240:2011. An inflection point of a DSC curve obtained by DSC analysis, that is, a peak top temperature of a differential curve, is an actual measurement value of the glass transition temperature of the modified copolymer (P). Preferably, the modified copolymer (P) has a glass transition temperature (actual measurement value) of -100 °C to 20 °C.

In the present specification, the actual measurement value of the glass transition temperature of the modified copolymer (P) expressed in Celsius temperature is written as "actual Tg" (unit: °C), and a temperature expressed in thermodynamic temperature is written as "actual glass transition temperature $Tg_r$" (unit: K) or simply "$Tg_r$" (unit: K). That is, the actual glass transition temperature $Tg_r$ (unit: K) is a value obtained by adding 273.15 to the actual Tg (unit: °C), and satisfies the following relationship.

Actual glass transition temperature $Tg_r$ (unit: K) = actual Tg (unit: °C) + 273.15

The actual Tg of the modified copolymer (P) is more preferably -90 °C or higher, and even more preferably -80 °C or higher. From the viewpoint of improving wet grip performance, the actual Tg of the modified copolymer (P) is more preferably 0 °C or lower, even more preferably -10 °C or lower, still more preferably -20 °C or lower, further preferably -30 °C or lower, still further preferably -40 °C or lower, and particularly preferably -45 °C or lower. Particularly, in the case where the modified copolymer (P) has only one endothermic peak in DSC analysis and the endothermic peak has a peak temperature in a temperature range of -100 °C to 20 °C, a crosslinked product formed using the modified copolymer (P) tends to be improved in wear resistance and strength.

Formula (1) above represents an estimation formula for a glass transition temperature of a conjugated diene polymer (Journal of the Society of Rubber Science and Technology, Japan 34(4), 246-253, 1961). According to formula (1), an estimated value of the glass transition temperature of the modified copolymer (P) can be obtained. In the present specification, the temperature calculated by formula (1) and expressed in thermodynamic temperature is written as "estimated glass transition temperature $Tg_{cl}$" (unit: K) or simply "$Tg_{cl}$" (unit: K). That is, the estimated glass transition temperature $Tg_{cl}$ is an estimated value of a glass transition temperature based on a mass fraction of the aromatic vinyl compound constituting the modified copolymer (P) and a glass transition temperature of a homopolymer consisting of a monomer constituting the modified copolymer (P). In the following, a value obtained by converting the estimated glass transition temperature $Tg_{cl}$ (unit: K) to Celsius temperature is also referred to as "estimated Tg" (unit: °C).

Generally, it is known that a glass transition temperature of a copolymer can be estimated based on a mass fraction of a structural unit constituting a molecular chain and a glass transition temperature of a homopolymer consisting

of a monomer constituting the copolymer. It is general that the glass transition temperature of the copolymer estimated in this way takes a value close to an actual measurement value. In contrast, in the modified copolymer (P), the actual glass transition temperature $Tg_r$ (unit: K) according to DSC analysis and the estimated glass transition temperature $Tg_{cl}$ (unit: K) according to formula (1) satisfy the relationship of formula (2). In other words, the actual Tg of the modified copolymer (P) exists at a lower temperature than the estimated Tg, and the absolute value of a difference between the actual Tg and the estimated Tg is as large as 6.0 °C or more. According to such a modified copolymer (P), a crosslinked product exhibiting excellent wet grip performance and wear resistance as well as high strength can be obtained.

In formula (1) above, the denominator of "$W_{Ar}$/380" represents a glass transition temperature (unit: K) of polystyrene, and the denominator of "1-$W_{Ar}$/188" represents a glass transition temperature (unit: K) of polybutadiene. In the present specification, with reference to the Revised 6th Edition of the Chemical Handbook Basic Edition edited by the Chemical Society of Japan (Maruzen Co., Ltd.), formula (1) above is determined with the glass transition temperature of polystyrene being set to 380 K and the glass transition temperature of polybutadiene being set to 188 K.

Here, it is inferred that the fact that the actual Tg of the modified copolymer (P) is sufficiently deviated to the lower temperature side compared to the estimated Tg reflects the following. The modified copolymer (P) is a polymer obtained by copolymerization in a system where a conjugated diene compound and an aromatic vinyl compound coexist. While the modified copolymer (P) has a copolymerized portion where the conjugated diene compound and the aromatic vinyl compound have an irregular arrangement order, the properties of each of a homopolymer of the conjugated diene compound and a homopolymer of the aromatic vinyl compound are strongly manifested. Generally, in the case of copolymerization under the coexistence of a conjugated diene compound and an aromatic vinyl compound, the resulting copolymer tends to poorly reflect the respective properties of the homopolymer of the conjugated diene compound and the homopolymer of the aromatic vinyl compound due to a random arrangement of a structural unit derived from the conjugated diene compound and a structural unit derived from the aromatic vinyl compound. In contrast, in the modified copolymer (P), it is conceivable that multiple structures in which the structural units derived from the conjugated diene compound are continuous and structures in which the structural units derived from the aromatic vinyl compound are continuous exist in a molecular chain, or a region where the structural units derived from the conjugated diene compound are partially more dense and a region where the structural units derived from the aromatic vinyl compound are partially more dense exist in a molecular chain. Accordingly, it is conceivable that in the modified copolymer (P), the properties of each of the homopolymer of the conjugated diene compound and the homopolymer of the aromatic vinyl compound are relatively strongly reflected. As a result, it is inferred that, according to the modified copolymer (P), a crosslinked product exhibiting excellent wet grip performance and wear resistance as well as high strength can be obtained. The above mechanism of action is merely a speculation and does not limit the disclosure in any way.

In the modified copolymer (P), from the viewpoint of obtaining a crosslinked product exhibiting excellent wet grip performance and wear resistance as well as high strength, a value (hereinafter also referred to as "difference ΔTg") obtained by subtracting the estimated glass transition temperature $Tg_{cl}$ from the actual glass transition temperature $Tg_r$ is preferably -6.3 K or less, more preferably -7.0 K or less, and even more preferably -7.5 K or less. By controlling the amount or distribution of the structural units derived from the aromatic vinyl compound in the molecular chain, a modified conjugated diene polymer satisfying formula (2) above can be obtained. Specifically, the difference ΔTg can be adjusted by controlling the amount of conjugated diene compound added during polymerization, the amount of potassium compound used, the amount of vinyl content regulator used, and the polymerization temperature.

Regarding ΔTg (= $Tg_r$ - $Tg_{cl}$) to be compared with a determination value (-6.0) in formula (2) above, in the present specification, for the actual glass transition temperature $Tg_r$ (unit: K), first, based on a measurement result of DSC in accordance with JIS K 6240:2011, the actual Tg (unit: °C) is obtained as a value to the ones place, and 273.15 is added to the obtained actual Tg to calculate $Tg_r$. The estimated glass transition temperature $Tg_{cl}$ (unit: K) is obtained as a value to two decimal places (by rounding off the third decimal place) using formula (1) above. In the present specification, the estimated glass transition temperature $Tg_{cl}$ is subtracted from the thus obtained actual glass transition temperature $Tg_r$, and a value obtained by rounding off the second decimal place of the value after subtraction is used as the difference ΔTg to be compared with the determination value (-6.0).

From the viewpoints of achieving a good balance between low hysteresis loss characteristics and wet grip performance of a crosslinked product obtained using the modified copolymer (P) as well as improving workability of a polymer composition containing the modified copolymer (P), a content ratio of the structural unit derived from the aromatic vinyl compound in the modified copolymer (P) is preferably 3 to 55 mass% with respect to a total amount of structural units constituting the modified copolymer (P). The content ratio of the structural unit derived from the aromatic vinyl compound is more preferably 5 mass% or more, even more preferably 10 mass% or more, still more preferably 15 mass% or more, and particularly preferably 20 mass% or more, with respect to the total amount of structural units constituting the modified copolymer (P). The content ratio of the structural unit derived from the aromatic vinyl compound in the modified copolymer (P) is more preferably 50 mass% or less, even more preferably 45 mass% or less, still more preferably 40 mass% or less, and particularly preferably 35 mass% or less, with respect to the total amount of structural units constituting the modified copolymer (P). The content ratio of the structural unit derived from the aromatic vinyl compound in the modified copolymer

(P) is a value measured by $^1$H-NMR.

Preferably, the modified copolymer (P) has a peak in a chemical shift range of $6.00 \leq \sigma < 6.89$ (where $\sigma$ represents a chemical shift (unit: ppm)) in a $^1$H-NMR spectrum measured using deuterated chloroform as a solvent. It is known that the peak appearing in the chemical shift range of $6.00 \leq \sigma < 6.89$ is derived from a chain structure (hereinafter also referred to as "specific chain") in which three or more structural units derived from the aromatic vinyl compound are continuous in the molecular chain of the conjugated diene polymer. In the modified copolymer (P), the specific chain is introduced into the molecular chain of the conjugated diene polymer by copolymerization of the conjugated diene compound and the aromatic vinyl compound. In this way, according to the modified copolymer (P) having the specific chain in the copolymerized portion of the conjugated diene compound and the aromatic vinyl compound, a crosslinked product having high wear resistance and high strength can be obtained.

In the modified copolymer (P), a content ratio θst (unit: mass%) of the specific chain with respect to the total amount of structural units derived from the aromatic vinyl compound can be calculated using formula (3) below from the $^1$H-NMR spectrum measured using deuterated chloroform as a solvent.

$$\theta st = [(\Sigma(a)/\Sigma(a, b)) \times 2.5] \times 100 \qquad ...(3)$$

(In formula (3), Σ(a) represents an integral value in a chemical shift range of $6.00 \leq \sigma < 6.89$, and Σ(a, b) represents a sum of integral values in chemical shift ranges of $6.00 \leq \sigma < 6.89$ and $6.89 \leq \sigma \leq 8.00$.)

In terms of being capable of achieving good wet grip performance while enhancing the wear resistance and strength of the obtained crosslinked product, preferably, the content ratio (θst) of the specific chain in the modified copolymer (P) is 15 to 60 mass%. In the modified copolymer (P), the content ratio of the specific chain is more preferably 20 mass% or more, and even more preferably 25 mass% or more, with respect to the total amount of structural units derived from the aromatic vinyl compound in the modified copolymer (P). The content ratio of the specific chain is more preferably 55 mass% or less, and even more preferably 50 mass% or less, with respect to the total amount of structural units derived from the aromatic vinyl compound in the modified copolymer (P).

A vinyl bond content of the modified copolymer (P) is preferably 20 mass% or more. By setting the vinyl bond content of the modified copolymer (P) to 20 mass% or more, the wet grip performance of the crosslinked product obtained from the modified copolymer (P) can be further improved. From this viewpoint, the vinyl bond content of the modified copolymer (P) is more preferably 22 mass% or more, and even more preferably 25 mass% or more. The vinyl bond content of the modified copolymer (P) is preferably 70 mass% or less. By setting the vinyl bond content of the modified copolymer (P) to 70 mass% or less, a decrease in wear resistance of the crosslinked product obtained from the modified copolymer (P) can be suppressed. From this viewpoint, the vinyl bond content of the modified copolymer (P) is more preferably 68 mass% or less, and even more preferably 65 mass% or less. In the present specification, the term "vinyl bond content" refers to a content ratio of structural units having 1,2-bonds with respect to all structural units of 1,3-butadiene in the modified copolymer (P), and is a value measured by $^1$H-NMR.

Regarding the modified copolymer (P), a polystyrene equivalent weight average molecular weight (Mw) as measured by a gel permeation chromatograph (GPC) is preferably $1.0 \times 10^5$ or more, more preferably $1.5 \times 10^5$ or more, and even more preferably $2.0 \times 10^5$ or more. The Mw of the modified copolymer (P) is preferably $2.0 \times 10^6$ or less, more preferably $1.5 \times 10^6$ or less, and even more preferably $1.2 \times 10^6$ or less. By the modified copolymer (P) having a Mw within the above range, a crosslinked product can be obtained having high strength as well as satisfactorily low hysteresis loss and excellent wear resistance. The Mw of the modified copolymer (P) referred to here represents a weight average molecular weight (total weight average molecular weight) based on all peaks of a GPC curve measured by GPC.

Regarding the modified copolymer (P), a peak top molecular weight (hereinafter also referred to as "1st peak weight average molecular weight") of a peak having a smallest molecular weight is preferably $5.0 \times 10^4$ or more, more preferably $8.0 \times 10^4$ or more, and even more preferably $1.0 \times 10^5$ or more. The 1st peak weight average molecular weight of the modified copolymer (P) is preferably $2.0 \times 10^6$ or less, more preferably $1.5 \times 10^6$ or less, and even more preferably $1.2 \times 10^6$ or less. The 1st peak weight average molecular weight of the modified copolymer (P) is a polystyrene equivalent value as measured by GPC.

Regarding the modified copolymer (P), a molecular weight distribution (Mw/Mn) expressed as a ratio of weight average molecular weight (Mw) to number average molecular weight (Mn) is preferably 4.0 or less, more preferably 3.0 or less, and even more preferably 2.5 or less.

From the viewpoint of obtaining a crosslinked product exhibiting excellent workability while achieving a good balance between low hysteresis loss characteristics and wet grip performance, the modified copolymer (P) preferably exhibits a Mooney viscosity of 5 to 200. From this viewpoint, the Mooney viscosity of the modified copolymer (P) is more preferably 10 or more, and even more preferably 30 or more. Here, the Mooney viscosity of the modified copolymer (P) is a value obtained in accordance with JIS K 6300-1:2013 using an L-type rotor under conditions of a preheating time of 1 minute, a rotor operation time of 4 minutes, and a temperature of 100 °C.

<Method for Producing Modified Copolymer (P)>

The method for producing the modified copolymer (P) is not particularly limited. Examples of preferred method for obtaining the modified copolymer (P) include a method including a process (hereinafter also referred to as "polymerization process") of polymerizing a monomer containing a conjugated diene compound and an aromatic vinyl compound in the presence of at least one polymerization initiator selected from the group consisting of an alkali metal compound and an alkaline earth metal compound, and a potassium compound. From the viewpoint of improving wear resistance and strength while enhancing wet grip performance of the crosslinked product obtained using the modified copolymer (P), in the polymerization process, it is preferable to initiate polymerization by placing in a reactor a portion of the total amount of a conjugated diene compound used for polymerization as an initially charged portion, and to continue the polymerization by adding the remaining conjugated diene compound to the reactor over a predetermined time during polymerization. Specifically, it is preferable to produce the modified copolymer (P) by a method including the following polymerization process and modification process.

·Polymerization Process

In the polymerization process of the disclosure, it is preferable to obtain a polymer having an active terminal by polymerizing a monomer containing a conjugated diene compound and an aromatic vinyl compound. Examples of polymerization methods that may be used include a solution polymerization method, a vapor-phase polymerization method, and a bulk polymerization method. Among them, the solution polymerization method is particularly preferable. The polymerization type may be either a batch type or a continuous type. In the case of using the solution polymerization method, specific examples of the polymerization method include polymerizing a monomer containing a conjugated diene compound and an aromatic vinyl compound in an organic solvent in the presence of a polymerization initiator and a potassium compound.

Examples of the monomer used for producing the modified copolymer (P) include the aforementioned conjugated diene compound and aromatic vinyl compound. In terms of having a high living property in anionic polymerization, the modified copolymer (P) is preferably a polymer containing 1,3-butadiene and styrene in its monomer composition. At the time of polymerization, compounds (hereinafter also referred to as "other monomers") other than the conjugated diene compound and the aromatic vinyl compound may further be used as monomers. Examples of other monomers include acrylonitrile, methyl (meth)acrylate, and ethyl (meth)acrylate. A use ratio of other monomers is preferably 10 mass% or less, more preferably 5 mass% or less, with respect to a total amount of monomers used for polymerization.

Specific examples of the polymerization initiator used in the above polymerization include alkyllithium, 1,4-dilithiobutane, phenyllithium, styryllithium, naphthyllithium, 1,3-bis(1-lithio-1,3-dimethylpentyl)benzene, 1,3-phenylene-bis(3-methyl-1-phenylpentylidene)dilithium, naphthylsodium, naphthylpotassium, ethoxypotassium, di-n-butylmagnesium, di-n-hexylmagnesium, and calcium stearate. Examples of alkyllithium include methyllithium, ethyllithium, n-propyllithium, n-butyllithium, sec-butyllithium, and t-butyllithium. Among them, preferably an alkali metal compound, more preferably a lithium compound, is used as the polymerization initiator.

The above polymerization reaction may be performed in the presence of a compound (hereinafter also referred to as "compound (MI)") obtained by mixing at least one selected from the group consisting of an alkali metal compound and an alkaline earth metal compound with an initiating terminal modifying agent. By polymerizing a monomer in the presence of the compound (MI), a functional group derived from the initiating terminal modifying agent can be introduced to a polymerization initiating terminal of the conjugated diene polymer.

As the initiating terminal modifying agent, a nitrogen-containing compound such as a secondary amine compound can be preferably used. Specific examples of the nitrogen-containing compound include a chain-like or cyclic secondary amine compound, such as dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tert-butyldimethylsilyl)piperazine, 1,3-ditrimethylsilyl-1,3,5-triazinane, N-trimethylsilylpiperazine, 1,3,3-trimethyl-6-azabicyclo[3.2.1]octane, and 1-propyl-3-azabicyclo[3.2.2]nonane.

In the case of polymerization in the presence of the compound (MI), at least one selected from the group consisting of an alkali metal compound and an alkaline earth metal compound may be mixed with the initiating terminal modifying agent in advance, and the mixture may be added to a polymerization system to perform polymerization. Alternatively, at least one selected from the group consisting of an alkali metal compound and an alkaline earth metal compound may be added separately from or at the same time as the initiating terminal modifying agent to a polymerization system, thereby mixing both in the polymerization system to perform polymerization. Both cases are included in embodiments of "polymerizing a monomer in the presence of a compound obtained by mixing at least one of an alkali metal compound and an alkaline earth metal compound with an initiating terminal modifying agent".

The amount of the polymerization initiator used (or the total amount in the case where two or more polymerization

initiators are used) is preferably 0.01 to 20 mmol, and more preferably 0.05 to 15 mmol, with respect to 100 g of monomers used for synthesizing the modified copolymer (P).

Examples of the potassium compound used in the polymerization process of the disclosure include a potassium salt of an organic carboxylic acid, a potassium salt of an organic sulfonic acid, a potassium salt of an organic phosphorous acid, potassium alkoxide, and potassium phenoxide. By performing polymerization of the conjugated diene compound and the aromatic vinyl compound in the presence of the potassium compound, and controlling a structure of a molecular chain (specifically, adjusting a position or a content ratio of a specific chain in a conjugated diene polymer), a modified conjugated diene polymer in which the actual glass transition temperature $Tg_r$ and the estimated glass transition temperature $Tg_{cl}$ satisfy the relationship of formula (2) above can be obtained by a simple operation.

Specific examples of the potassium compound include, as the potassium alkoxide and the potassium phenoxide, potassium isopropoxide, potassium t-butoxide, potassium 2-methylpropoxide, potassium 1,1-dimethylpropoxide, potassium n-heptaoxide, potassium cyclohexaoxide, potassium benzyloxide, potassium 2-ethyl-1-hexaoxide, potassium 2-octaoxide, potassium 2-heptaoxide, potassium phenoxide, potassium 2,6-di-t-butyl-p-methylphenoxide, potassium 2,6-di-t-butyl-p-methylphenoxide, potassium octylphenoxide, potassium nonylphenoxide, and potassium dodecylphenoxide. In the polymerization process of the disclosure, as the potassium alkoxide or the potassium phenoxide, a complex of the potassium alkoxide or potassium phenoxide mentioned above with an alcohol or amine may be used. Examples of the alcohol or amine include a chain-like or cyclic aliphatic alcohol having 1 to 12 carbon atoms, thioalcohol, and a primary amine or secondary amine.

Examples of the potassium salt of the organic carboxylic acid include potassium isovalerate, potassium caprylate, potassium laurate, potassium palmitate, potassium stearate, potassium oleate, potassium linoleate, potassium benzoate, potassium phthalate, and potassium 2-ethylhexanoate. As the potassium salt of the organic carboxylic acid, a complex of the potassium salt of the organic carboxylic acid mentioned above with an alcohol or amine may be used. Examples of the alcohol or amine include a chain-like or cyclic aliphatic alcohol having 1 to 12 carbon atoms, thioalcohol, and a primary amine or secondary amine.

Examples of the potassium salt of the organic sulfonic acid include potassium dodecylbenzenesulfonate, potassium tetradecylbenzenesulfonate, potassium hexadecylbenzenesulfonate, and potassium octadecylbenzenesulfonate. As the potassium salt of the organic sulfonic acid, a complex of the potassium salt of the organic sulfonic acid mentioned above with an alcohol or amine may be used. Examples of the alcohol or amine include a chain-like or cyclic aliphatic alcohol having 1 to 12 carbon atoms, thioalcohol, and a primary amine or secondary amine.

Examples of the potassium salt of the organic phosphorous acid include potassium diethyl phosphite, potassium diisopropyl phosphite, potassium diphenyl phosphite, potassium dibutyl phosphite, and potassium dilauryl phosphite.

The potassium compound used for producing the modified copolymer (P) is preferably at least one selected from the group consisting of a potassium salt of an organic carboxylic acid, a potassium salt of an organic sulfonic acid, a potassium salt of an organic phosphorous acid, potassium alkoxide, and potassium phenoxide, and is more preferably a potassium salt of an organic sulfonic acid. One of the above potassium compounds may be used alone or two or more thereof may be used in combination.

At the time of the above polymerization reaction, a use ratio of the potassium compound is preferably in an amount of 0.005 to 0.5 mol per 1 mol of metal atoms contained in the polymerization initiator that are involved in the polymerization reaction. By setting the use ratio of the potassium compound to 0.005 mol or more, the effects (particularly, the ability to adjust the content ratio of specific chain in the polymer) of adding the potassium compound can be sufficiently obtained. By setting the use ratio of the potassium compound to 0.5 mol or less, a decrease in polymerization activity can be suppressed and sufficient productivity can be ensured, or a decrease in modification efficiency during a modification reaction for introducing a functional group to a polymer terminal can be suppressed. From this viewpoint, the use ratio of the potassium compound is more preferably in an amount of 0.3 mol or less, and even more preferably in an amount of 0.1 mol or less, per 1 mol of metal atoms contained in the polymerization initiator that are involved in the polymerization reaction.

The above polymerization reaction may be performed in the presence of a vinyl content regulator (also referred to as "randomizer") for the purpose of adjusting a vinyl bond content which represents a content ratio of a vinyl bond in a polymer, or the like. Examples of the vinyl content regulator include an ether compound and a tertiary amine compound. Specific examples of the vinyl content regulator include dimethoxybenzene, tetrahydrofuran, dimethoxyethane, diethylene glycol dibutyl ether, diethylene glycol dimethyl ether, 2,2-di(2-tetrahydrofuryl)propane, 2-(2-ethoxyethoxy)-2-methylpropane, triethylamine, pyridine, N-methylmorpholine, and tetramethylethylenediamine. One of the vinyl content regulators may be used alone or two or more thereof may be used in combination.

As an organic solvent used for polymerization, any solvent that is inert to the reaction may be used. Examples of the organic solvent include a chain-like or cyclic aliphatic hydrocarbon or aromatic hydrocarbon. Among them, a hydrocarbon having 3 to 8 carbon atoms is preferable. Specific examples thereof include propane, n-butane, isobutane, n-pentane, isopentane, n-hexane, cyclohexane, propene, 1-butene, isobutene, trans-2-butene, cis-2-butene, 1-hexene, 2-hexene, benzene, toluene, xylene, ethylbenzene, heptane, cyclopentane, methylcyclopentane, methylcyclohexane, 1-pentene, 2-pentene, and cyclohexene. One of the organic solvents may be used alone or two or more thereof may be used in combination.

In the case of solution polymerization, a monomer concentration in a reaction solvent is preferably 5 to 50 mass% and more preferably 10 to 30 mass%, from the viewpoint of maintaining a balance between productivity and ease of polymerization control. A temperature of the polymerization reaction is preferably -20 °C to 150 °C, and more preferably 0 °C to 120 °C. Preferably, the polymerization reaction is performed under sufficient pressure to substantially maintain the monomer in the liquid phase.

In the polymerization process for obtaining the modified copolymer (P), it is preferable to initiate polymerization by charging a portion of the total amount of the conjugated diene compound used for polymerization and the aromatic vinyl compound into a reactor. These monomers may be added to the reactor before the polymerization initiator, or the polymerization initiator may be added to the reactor first, followed by the addition of the monomers. The timing of adding the potassium compound and the vinyl content regulator is not particularly limited, and the potassium compound and the vinyl content regulator may be added to the reactor together with the monomers, or before or after the monomers. The aromatic vinyl compound may be added into the reactor all at once or in portions. From the viewpoints of work efficiency and maintaining a balance between wet grip performance and wear resistance, in the polymerization process of the disclosure, it is preferable to initiate polymerization by charging all of the aromatic vinyl compound used for polymerization into the reactor.

Out of the total amount of the conjugated diene compound used for polymerization, the remaining portion of the conjugated diene compound that was not used in the initial charge is preferably added into the reactor over a predetermined time during polymerization. A ratio between an initially charged amount Q1 and an addition amount Q2 during polymerization of the conjugated diene compound used for polymerization is not particularly limited. From the viewpoint of improving wear resistance and strength while enhancing wet grip performance of the crosslinked product obtained using the modified copolymer (P), the ratio (mass ratio) between the initially charged amount Q1 to the addition amount Q2 during polymerization is preferably as follows: Q1:Q2 = 1:0.5 to 7, more preferably Q1:Q2 = 1:0.7 to 5.

The timing of adding the remaining conjugated diene compound during polymerization is not particularly limited. For example, the addition of the remaining conjugated diene compound may be initiated after it is confirmed that a polymerization conversion rate of a monomer in the initially charged portion has reached 5% to 50%, or has reached 10% to 35%. It is preferable to add the remaining conjugated diene compound over a sufficient period of time during polymerization. Specifically, it is preferable to add the conjugated diene compound over a period of 5 to 60 minutes, and more preferable to add the conjugated diene compound over a period of 10 to 45 minutes. In the case of adding the conjugated diene compound into the reactor during polymerization, it is sufficient that the addition takes a predetermined time. The conjugated diene compound may be added in a continuous manner, or may be divided into multiple portions and added in a multistage manner.

·Modification Process

The modified copolymer (P) is preferably produced by a method including a process (also referred to as modification process) of reacting a polymer having an active terminal obtained by the above polymerization process with a compound (that is, terminal modifying agent) having one or more elements selected from the group consisting of nitrogen, silicon, sulfur, oxygen and phosphorus. By reacting the polymer having an active terminal with the terminal modifying agent, a molecular chain containing a monomer unit derived from the conjugated diene compound and the aromatic vinyl compound is bonded to the terminal modifying agent. Thereby, a modified conjugated diene polymer can be obtained into which a functional group having one or more elements selected from the group consisting of nitrogen, silicon, sulfur, oxygen and phosphorus is introduced. The polymer used for the reaction with the terminal modifying agent may be an unmodified conjugated diene polymer, or a modified conjugated diene polymer having a partial structure derived from an initiating terminal modifying agent at a terminal portion, or a modified conjugated diene polymer containing a structural unit derived from a modified monomer.

The terminal modifying agent may be a compound having one functional group capable of reacting with the active terminal contained in the polymer obtained by the above polymerization process, or may be a compound (coupling agent) having multiple functional groups capable of reacting with the active terminal. The terminal modifying agent is preferably a compound having one or more elements selected from the group consisting of nitrogen, silicon, sulfur, oxygen and phosphorus, and more preferably a compound having at least one selected from the group consisting of a nitrogen-containing group, a hydrocarbyloxy silyl group, an epoxy group, and a polysiloxane structure. The term "hydrocarbyloxy silyl group" refers to a group in which at least one hydrocarbyloxy group is bonded to a silicon atom, and is represented by formula (5) below. The term "epoxy group" encompasses "oxetanyl group" and "oxiranyl group".

[Chem 1]

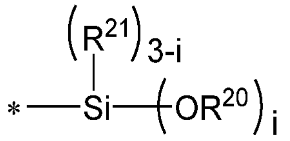

(5)

(In formula (5), $R^{20}$ and $R^{21}$ are each independently a hydrocarbyl group. i is an integer of 1 to 3. In the case where i is 1, multiple $R^{21}$ in the formula are the same or different. In the case where i is 2 or 3, multiple $R^{20}$ in the formula are the same or different. "*" represents a binding site.)

Specific examples of the terminal modifying agent include, as a compound having an epoxy group, those described in Japanese Patent Laid-Open No. 2002-284930, WO 2008/123215, and Japanese Patent Laid-Open No. 2009-227858. Examples of a compound having an epoxy group and a polysiloxane structure include one described in Japanese Patent Laid-Open No. 2009-084413.

As the terminal modifying agent, a compound (hereinafter also referred to as "modifying agent (M)") having one or more nitrogen-containing groups and one or more hydrocarbyloxy silyl groups in a single molecule can be particularly preferably used. The modifying agent (M) is preferable since its use as the terminal modifying agent can further improve the low hysteresis loss characteristics when the modified copolymer (P) is formed into a crosslinked product.

The modifying agent (M) is preferably at least one selected from the group consisting of a compound represented by the following formula (6), a compound represented by the following formula (7), a compound represented by the following formula (8), and a compound represented by the following formula (9).

[Chem 2]

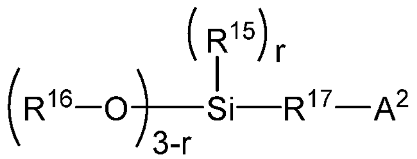

(6)

(In formula (6), $A^2$ is a monovalent functional group having at least one element selected from the group consisting of nitrogen, silicon, sulfur, oxygen and phosphorus, having no active hydrogen, and bonding to $R^{17}$ via nitrogen, silicon, sulfur, oxygen, or phosphorus. $R^{15}$ and $R^{16}$ are each a hydrocarbyl group, $R^{17}$ is a hydrocarbylene group, and r is an integer of 0 to 2. In the case where r is 0 or 1, multiple $R^{16}$ in the formula are the same or different; in the case where r is 2, multiple $R^{15}$ in the formula are the same or different.)

[Chem 3]

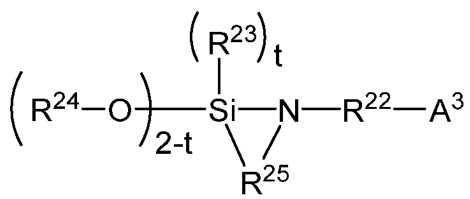

(7)

(In formula (7), $A^3$ is a monovalent functional group having at least one element selected from the group consisting of nitrogen, phosphorus, oxygen, sulfur, and silicon, having no active hydrogen, and bonding to $R^{22}$ via nitrogen, phosphorus, oxygen, sulfur, or silicon, or is a hydrocarbyl group having 1 to 20 carbon atoms. $R^{22}$ is a single bond or a hydrocarbylene group, $R^{23}$ and $R^{24}$ are each independently a hydrocarbyl group, $R^{25}$ is a hydrocarbylene group, and t is 0 or 1. In the case where t is 0, multiple $R^{24}$ in the formula are the same or different.)

[Chem 4]

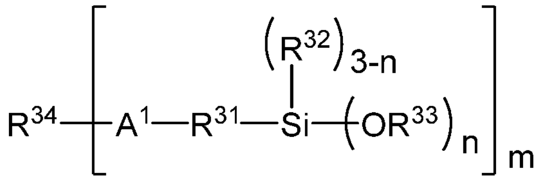 (8)

(In formula (8), $R^{31}$ is an alkanediyl group having 1 to 20 carbon atoms, $R^{32}$ and $R^{33}$ are each independently a hydrocarbyl group having 1 to 20 carbon atoms, $A^1$ is a group "*-C($R^{35}$)=N*-C($R^{35}$)=N-" or a group "*-N=C($R^{35}$)-" (where $R^{35}$ is a hydrogen atom or a hydrocarbyl group, and "*" represents a binding site bonded to $R^{34}$). $R^{34}$ is an m-valent hydrocarbon group having 1 to 20 carbon atoms, or an m-valent group having 1 to 20 carbon atoms and having at least one element selected from the group consisting of nitrogen, oxygen, and sulfur, and having no active hydrogen. n is an integer of 1 to 3, and m is an integer of 2 to 10. In the case where multiple identical symbols among $R^{31}$ to $R^{33}$ and $A^1$ exist in the formula, the groups represented by the identical symbol are the same or different from each other. Multiple n in the formula are the same or different.)

[Chem 5]

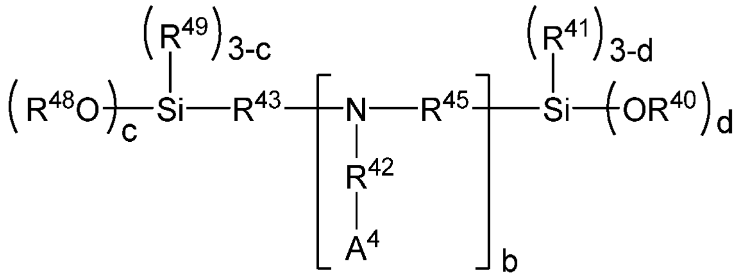 (9)

(In formula (9), $R^{42}$, $R^{43}$, and $R^{45}$ are each independently an alkanediyl group having 1 to 12 carbon atoms; $R^{40}$, $R^{41}$, $R^{48}$, and $R^{49}$ are each independently a hydrocarbyl group having 1 to 20 carbon atoms. $A^4$ is a nitrogen-containing heterocyclic group, or a group represented by the following formula (a4).

[Chem 6]

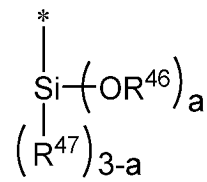 (a4)

(In formula (a4), $R^{46}$ and $R^{47}$ are each independently a hydrocarbyl group having 1 to 20 carbon atoms. a is an integer of 1 to 3. In the case where multiple identical symbols exist in the formula, the groups represented by the identical symbol are the same or different from each other. "*" represents a binding site.)

c and d are each independently an integer of 1 to 3, and b is an integer of 1 to 10. In the case where multiple identical symbols exist in the formula, the groups represented by the identical symbol are the same or different from each other.)

In formula (6) and formula (7) above, the hydrocarbyl group represented by $R^{15}$, $R^{16}$, $R^{23}$, and $R^{24}$ is preferably a linear or branched alkyl group having 1 to 20 carbon atoms, a cycloalkyl group having 3 to 20 carbon atoms, or an aryl group having 6 to 20 carbon atoms. $R^{17}$ and $R^{22}$ are each preferably a linear or branched alkanediyl group having 1 to 20 carbon atoms, a cycloalkylene group having 3 to 20 carbon atoms, or an arylene group having 6 to 20 carbon atoms. $R^{25}$ is preferably a linear or branched alkanediyl group having 1 to 20 carbon atoms.

$A^2$ is a nitrogen-containing group, which may have a chain-like structure or a cyclic structure. The nitrogen contained in $A^2$ may not be bonded to an active hydrogen, and may be protected by a protecting group (such as a tri-substituted hydrocarbylsilyl group). $A^2$ may be a group capable of becoming an onium ion by an onium salt generating agent.

Specific examples of $A^2$ include a nitrogen-containing group in which two hydrogen atoms of a primary amino group are replaced by two protecting groups, a nitrogen-containing group in which one hydrogen atom of a secondary

amino group is replaced by one protecting group, a tertiary amino group, an imino group, and a pyridyl group. Among them, preferably, $A^2$ has at least one selected from the group consisting of a tertiary amino group, a group in which one hydrogen atom of a secondary amino group is replaced by one protecting group, a group in which two hydrogen atoms of a primary amino group are replaced by two protecting groups, and an imino group. In the present specification, a "protecting group" refers to a functional group that converts $A^2$ into a functional group inert to a polymerization active terminal. The nitrogen-containing group in which one hydrogen atom of a secondary amino group is replaced by one protecting group and the tertiary amino group may be chain-like or cyclic.

The at least one element selected from the group consisting of nitrogen, phosphorus, oxygen, sulfur, and silicon contained in $A^3$ may not be bonded to an active hydrogen, and may be protected by a protecting group (for example, a tri-substituted hydrocarbylsilyl group). $A^3$ may be a group capable of becoming an onium ion by an onium salt generating agent.

Specific examples of $A^3$ include a nitrogen-containing group in which two hydrogen atoms of a primary amino group are replaced by two protecting groups, a nitrogen-containing group in which one hydrogen atom of a secondary amino group is replaced by one protecting group, a tertiary amino group, an imino group, a pyridyl group, a phosphorus-containing group in which two hydrogen atoms of a primary phosphino group are replaced by two protecting groups, a phosphorus-containing group in which one hydrogen atom of a secondary phosphino group is replaced by one protecting group, a tertiary phosphino group, a group in which a hydrogen atom of a hydroxyl group is protected by a protecting group, a sulfur-containing group in which a hydrogen atom of a thiol group is replaced by a protecting group, and a hydrocarbyloxy silyl group. Among them, $A^3$ is preferably a group containing silicon or nitrogen, and more preferably a hydrocarbyloxy silyl group, a nitrogen-containing group having a protecting group, or a tertiary amino group.

In formula (8) above, examples of the hydrocarbylene group represented by $R^{31}$ include an alkanediyl group having 1 to 12 carbon atoms, a cycloalkylene group having 3 to 12 carbon atoms, and an arylene group having 6 to 12 carbon atoms. Examples of the hydrocarbyl group represented by $R^{32}$ and $R^{33}$ include an alkyl group having 1 to 20 carbon atoms, an allyl group, a cycloalkyl group having 3 to 20 carbon atoms, and an aryl group having 6 to 20 carbon atoms.

The m-valent hydrocarbon group represented by $R^{34}$ is a group obtained by removing m hydrogen atoms from a hydrocarbon. Among them, the m-valent hydrocarbon group represented by $R^{34}$ is preferably a group (m-valent aromatic ring group) obtained by removing m hydrogen atoms from a ring portion of an aromatic hydrocarbon. Specific examples of the aromatic hydrocarbon include a single ring or condensed ring, such as benzene ring, naphthalene ring, and anthracene ring, and a structure in which two or more of these rings are connected by a single bond.

In the case where $R^{34}$ is an m-valent group having 1 to 20 carbon atoms that has at least one element selected from the group consisting of nitrogen, oxygen, and sulfur, and does not have an active hydrogen, specific examples thereof include an m-valent heterocyclic group and an m-valent group having a tertiary amine structure. The heterocyclic group is preferably of a conjugated system. Examples thereof include a single ring or condensed ring such as pyridine, pyrimidine, pyrazine, quinoline, naphthyridine, furan, and thiophene, or a group obtained by removing m hydrogen atoms from a ring portion of a structure in which multiple of these rings are linked together.

From the viewpoint of further improving the workability of the polymer composition containing the modified copolymer (P), m is preferably 2 to 6. In terms of being capable of further improving the dispersibility of silica, m is preferably 2 or 3, and more preferably 3.

In formula (9) and formula (a4) above, the alkanediyl group represented by $R^{45}$, $R^{42}$, and $R^{43}$ are preferably linear. Examples of the hydrocarbyl group represented by $R^{40}$, $R^{41}$, and $R^{46}$ to $R^{49}$ include an alkyl group having 1 to 20 carbon atoms, an allyl group, a cycloalkyl group having 3 to 20 carbon atoms, and an aryl group having 6 to 20 carbon atoms.

In the case where $A^4$ is a nitrogen-containing heterocyclic group, the nitrogen-containing heterocyclic group is preferably derived from a conjugated heterocyclic ring. Examples of the nitrogen-containing heterocyclic group include a group obtained by removing one hydrogen atom from a nitrogen-containing heterocyclic ring such as pyrrole, imidazole, pyridine, pyrimidine, pyrazine, quinoline, naphthyridine, or benzimidazole.

In terms of being capable of further improving the dispersibility of silica, a, c, and d are preferably 2 or 3, and more preferably 3. b is preferably 1 to 5, and more preferably 1 to 3.

Specific examples of the terminal modifying agent include, as the compound represented by formula (6) above, N,N-bis(trimethylsilyl)aminopropyltrimethoxysilane, N,N-bis(trimethylsilyl)aminopropylmethyldiethoxysilane, 1-phenyl-N-(3-(triethoxysilyl)propyl)methanimine, N,N',N'-tris(trimethylsilyl)-N-(2-aminoethyl)-3-aminopropyltriethoxysilane, 3-(4-trimethylsilyl-1-piperazino)propylmethyldimethoxysilane, 3-(trimethylsilylmercapto)propyltrimethoxysilane, and 3-(diphenylphosphino)propylmethyldiethoxysilane.

Examples of the compound represented by formula (7) above include 1-trimethylsilyl-2,2-dimethoxy-1-aza-2-silacyclopentane, 1-triethylsilyl-2,2-diethoxy-1-aza-2-silacyclopentane, 2,2-dimethoxy-1-(3-trimethoxysilylpropyl)-1,2-azasilolidine, 2,2-dimethoxy-1-phenyl-1,2-azasilolidine, and 2-(2,2-dimethoxy-1,2-azasilolidin-1-yl)-N,N-diethylethan-1-amine.

Examples of the compound represented by formula (8) above include a compound represented by each of

formula (m-1-1) to formula (m-1-8) below, as well as a compound in which the alkyl group and alkanediyl group in the compound are replaced with an alkyl group having 1 to 6 carbon atoms and an alkanediyl group having 1 to 6 carbon atoms.

[Chem 7]

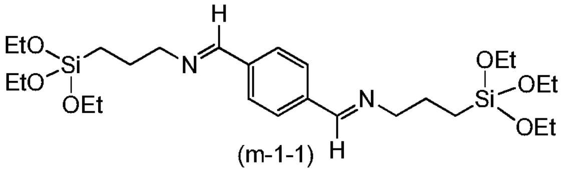

(m-1-1)

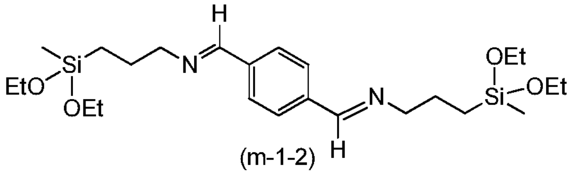

(m-1-2)

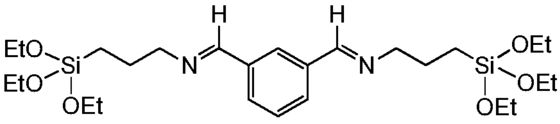

(m-1-3)

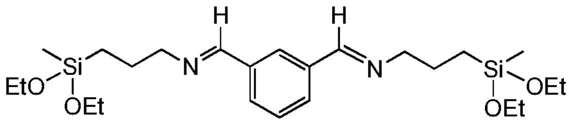

(m-1-4)

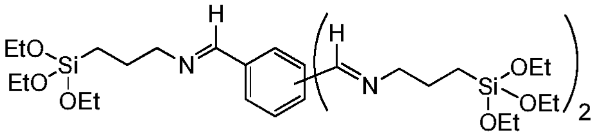

(m-1-5)

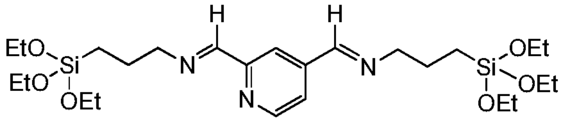

(m-1-6)

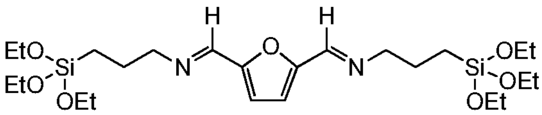

(m-1-7)

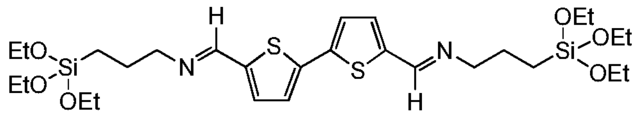

(m-1-8)

Examples of the compound represented by formula (9) above include tris(2-triethoxysilylethyl)amine, tris(3-triethoxysilylpropyl)amine, tris(5-triethoxysilylpentyl)amine, N,N,N',N'-tetra(2-triethoxysilylethyl)-1,2-diaminoethane, N,N,N',N'-tetra(3-triethoxysilylpropyl)-1,3-diaminopropane, N-(3-(1H-imidazol-1-yl)propyl)-3-(trimethoxysilyl)-N-(3-(trimethoxysilyl))propyl)propan-1-amine, and a compound in which an alkyl group and an alkanediyl group in these compounds are replaced by an alkyl group having 1 to 6 carbon atoms and an alkanediyl group having 1 to 6 carbon atoms, respectively.

Examples of the terminal modifying agent that can be used for synthesis of the modified copolymer (P) include, in addition to the above, tetrachlorosilane (silicon tetrachloride), tetramethoxysilane, and bis(trichlorosilyl)ethane. One of the above terminal modifying agents may be used alone or two or more thereof may be used in combination.

The reaction between the polymer having an active terminal and the terminal modifying agent is preferably performed as a solution reaction. From the viewpoint of sufficiently progressing a modification reaction, a use ratio of the terminal modifying agent (or the total amount in the case where two or more terminal modifying agents are used) is preferably 0.01 mol or more, more preferably 0.05 mol or more, with respect to 1 mol of metal atoms contained in the polymerization initiator that are involved in the polymerization. The use ratio of the terminal modifying agent is preferably less than 2.0 mol, more preferably less than 1.0 mol, even more preferably less than 0.7 mol, and still more preferably less than 0.5 mol, with respect to 1 mol of metal atoms contained in the polymerization initiator that are involved in the polymerization.

A temperature of the modification reaction is usually the same as that of the polymerization reaction, and is preferably -20 °C to 150 °C, and more preferably 0 °C to 120 °C. In the case of a low reaction temperature, the viscosity of the polymer after modification tends to increase; in the case of a high reaction temperature, the polymerization active terminal tends to be easily deactivated. The reaction time is preferably 1 minute to 5 hours, and more preferably 2 minutes to 1 hour. To isolate the modified copolymer (P) contained in the reaction solution, a known desolvation method such as steam stripping and a drying operation such as heat treatment can be performed.

<<Polymer Composition>>

A polymer composition of the disclosure contains the modified copolymer (P) and at least one filler selected from the group consisting of silica and carbon black. The polymer composition of the disclosure may further contain various components other than the modified copolymer (P), silica, and carbon black.

[B] Silica

The polymer composition of the disclosure may contain [B] silica. A blending amount of [B] silica is preferably in the range of 20 to 200 parts by mass, more preferably in the range of 30 to 150 parts by mass, with respect to 100 parts by mass of a rubber component containing the modified copolymer (P). If the blending amount of [B] silica is 20 parts by mass or more with respect to 100 parts by mass of the rubber component, the low hysteresis loss characteristics, fracture characteristics, and wear resistance of a crosslinked product obtained from the polymer composition can be sufficiently improved. If the blending amount is 200 parts by mass or less, workability of the polymer composition can be sufficiently improved.

In the present specification, the term "rubber component" contained in the polymer composition refers to a polymer capable of yielding a cured product exhibiting rubber elasticity through curing or the like. The cured product exhibits a property in which large deformation (for example, deformation to stretch the length to twice or more the original length at room temperature) is caused in the cured product by a small force at room temperature, and the cured product rapidly returns to almost its original shape when the force is removed.

[B] silica is not particularly limited, and examples thereof include wet silica (hydrated silicic acid), dry silica (anhydrous silicic acid), calcium silicate, and aluminum silicate. Among them, wet silica is preferable. One type of [B] silica may be used alone or two or more types thereof may be used in combination. A Brunauer-Emmett-Teller (BET) specific surface area (value measured in accordance with ISO 5794/1) of [B] silica is preferably in the range of 10 to 350 $m^2/g$, more preferably in the range of 20 to 300 $m^2/g$, and particularly preferably in the range of 30 to 250 $m^2/g$. The silica having a BET specific surface area in the above range has an advantage of being good in both rubber reinforcement properties and dispersibility in the modified copolymer (P). As such silica, a commercially available product, such as "Nipsil AQ" (BET specific surface area = 205 $m^2/g$) and "Nipsil KQ" produced by Tosoh Silica, and "Ultrasil VN3" (BET specific surface area = 175 $m^2/g$) produced by Degussa, can be used.

The silica contained in the polymer composition may be a combination of two or more types of silica having different specific surface areas. Specifically, a first silica having a cetyltrimethylammonium bromide (CTAB) specific surface area of 180 $m^2/g$ or more, a BET specific surface area of 185 $m^2/g$ or more, and an aggregate size of 45 nm or more, and a second silica having a CTAB specific surface area of 95 $m^2/g$ or less and a BET specific surface area of 100 $m^2/g$ or less may be used in combination. The CTAB specific surface area of silica is measured in accordance with ASTM D3765-92.

One aspect of the polymer composition contains the first silica having a CTAB specific surface area of 180 $m^2/g$ or more, a BET specific surface area of 185 $m^2/g$ or more, and an aggregate size of 45 nm or more, and the second silica having a CTAB specific surface area of 95 $m^2/g$ or less and a BET specific surface area of 100 $m^2/g$ or less. By using such a combination of the first silica and the second silica, it is possible to effectively disperse the first silica, which has a small average primary particle diameter but a relatively large aggregate size, in the rubber component. The dispersibility of silica can be improved, and excellent rubber breaking strength, wear resistance, low hysteresis loss characteristics, and workability can be obtained.

The CTAB specific surface area of the first silica is preferably 190 $m^2/g$ or more, more preferably 195 $m^2/g$ or more, and even more preferably 197 $m^2/g$ or more. If the CTAB specific surface area is 190 $m^2/g$ or more, the rubber breaking strength and wear resistance of the crosslinked product obtained from the polymer composition tend to be able to be sufficiently improved. The CTAB specific surface area is preferably 350 $m^2/g$ or less, more preferably 300 $m^2/g$ or less, and even more preferably 250 $m^2/g$ or less. If the CTAB specific surface area is 350 $m^2/g$ or less, the silica tends to be less likely to aggregate, and physical properties can be improved.

The BET specific surface area of the first silica is preferably 190 $m^2/g$ or more, more preferably 195 $m^2/g$ or more, and even more preferably 210 $m^2/g$ or more. If the BET specific surface area is 190 $m^2/g$ or more, the rubber breaking strength and wear resistance of the crosslinked product obtained from the polymer composition tend to be able to be sufficiently improved. The BET specific surface area is preferably 350 $m^2/g$ or less, more preferably 300 $m^2/g$ or less, and even more preferably 260 $m^2/g$ or less. If the BET specific surface area is 350 $m^2/g$ or less, the silica tends to be less likely to aggregate, and physical properties can be improved. The BET specific surface area of silica is measured in accordance with ASTM D3037-81.

The aggregate size of the first silica is preferably 45 nm or more, more preferably 50 nm or more, even more preferably 55 nm or more, and still more preferably 60 nm or more. The aggregate size is preferably 100 nm or less, more preferably 80 nm or less, even more preferably 70 nm or less, and still more preferably 67 nm or less. By having such an aggregate size, excellent low hysteresis loss characteristics and wear resistance can be provided while good dispersibility (workability) is achieved. The aggregate size of silica can be measured according to a method described in Japanese Patent Laid-Open No. 2011-140613.

An average primary particle diameter of the first silica is preferably 25 nm or less, more preferably 22 nm or less, even more preferably 17 nm or less, and particularly preferably 14 nm or less. A lower limit of the average primary particle diameter is not particularly limited. However, the average primary particle diameter is preferably 3 nm or more, more

preferably 5 nm or more, and even more preferably 7 nm or more. While such a small average primary particle diameter is provided, due to a structure similar to that of carbon black having the aforementioned aggregate size, the dispersibility (workability) of silica can be further improved, and the low hysteresis loss characteristics and wear resistance can be further improved. The average primary particle diameter of silica can be obtained by observing silica using a transmission or scanning electron microscope, measuring a particle diameter of 400 or more primary particles of the silica observed in the field of view, and calculating an average thereof.

The CTAB specific surface area of the second silica is preferably 10 $m^2/g$ or more, more preferably 20 $m^2/g$ or more, and even more preferably 30 $m^2/g$ or more. If the CTAB specific surface area is less than 10 $m^2/g$, there is a risk that the reinforcement properties may decrease, and the mechanical strength or wear resistance necessary for the polymer composition used in tire manufacturing may be difficult to ensure. The CTAB specific surface area is preferably 80 $m^2/g$ or less, more preferably 60 $m^2/g$ or less, and even more preferably 50 $m^2/g$ or less. If the CTAB specific surface area exceeds 95 $m^2/g$, there is a risk that the dispersibility of silica may deteriorate, and it may be difficult to improve the rubber breaking strength and wear resistance.

The BET specific surface area of the second silica is preferably 10 $m^2/g$ or more, more preferably 20 $m^2/g$ or more, and even more preferably 30 $m^2/g$ or more. If the BET specific surface area is 10 $m^2/g$ or more, sufficient reinforcement properties tends to be achieved and the mechanical strength or wear resistance necessary for the polymer composition to obtain rubber for tires tend to be easily ensured. The BET specific surface area is preferably 85 $m^2/g$ or less, more preferably 60 $m^2/g$ or less, and even more preferably 50 $m^2/g$ or less. If the BET specific surface area is 85 $m^2/g$ or less, the silica tends to sufficiently disperse, and the rubber breaking strength and wear resistance tend to be easily improved.

An average primary particle diameter of the second silica is preferably 20 nm or more, more preferably 25 nm or more, even more preferably 30 nm or more, particularly preferably 35 nm or more, and most preferably 55 nm or more. The average primary particle diameter is preferably 500 nm or less, more preferably 200 nm or less, even more preferably 100 nm or less, and particularly preferably 70 nm or less. By having such an average primary particle diameter, the rubber breaking strength and wear resistance can be improved.

[C] Carbon Black

From the viewpoint of fracture characteristics and wear resistance of the polymer composition, the polymer composition of the disclosure preferably contains [C] carbon black. The carbon black is not particularly limited, and examples thereof include carbon black of GPF, FEF, HAF, ISAF, and SAF grades. A nitrogen adsorption specific surface area ($N_2SA$) of the carbon black is not particularly limited, but is preferably 50 to 200 $m^2/g$, and more preferably 70 to 150 $m^2/g$ for reasons of further enhanced effects of the disclosure. The nitrogen adsorption specific surface area ($N_2SA$) is a value obtained by measuring the amount of nitrogen adsorbed on a carbon black surface according to JIS K 6217-2:2001 "Part 2: Determination of Specific Surface Area - Nitrogen Adsorption Methods - Single-point Procedures". One type of carbon black may be used alone or two or more types thereof may be used in combination. A blending amount of carbon black is preferably in the range of 1 to 150 parts by mass, more preferably in the range of 5 to 120 parts by mass, with respect to 100 parts by mass of a rubber component containing the modified copolymer (P).

·Other Fillers

The polymer composition of the disclosure may contain, in addition to the aforementioned [B] silica and [C] carbon black, any other filler as an inorganic filler. Examples of other fillers include: alumina ($Al_2O_3$), such as $\gamma$-alumina and $\alpha$-alumina; alumina monohydrate ($Al_2O_3 \cdot H_2O$), such as boehmite and diaspore; aluminum hydroxide [$Al(OH)_3$] such as gibbsite and bayerite; aluminum carbonate [$Al_2(CO_3)_3$]; magnesium hydroxide [$Mg(OH)_2$]; magnesium oxide (MgO); magnesium carbonate ($MgCO_3$); talc ($3MgO \cdot 4SiO_2 \cdot H_2O$); attapulgite ($5MgO \cdot 8SiO_2 \cdot 9H_2O$); titanium white ($TiO_2$); titanium black ($TiO_{2n-1}$); calcium oxide (CaO); calcium hydroxide [$Ca(OH)_2$]; magnesium aluminum oxide ($MgO \cdot Al_2O_3$); clay ($Al_2O_3 \cdot 2SiO_2$); kaolin ($Al_2O_3 \cdot 2SiO_2 \cdot 2H_2O$); pyrophyllite ($Al_2O_3 \cdot 4SiO_2 \cdot H_2O$); bentonite ($Al_2O_3 \cdot 4SiO_2 \cdot 2H_2O$); aluminum silicate (such as $Al_2SiO_5$, $Al_4 \cdot 3SiO_4 \cdot 5H_2O$); magnesium silicate (such as $Mg_2SiO_4$, $MgSiO_3$); calcium silicate (such as $Ca_2SiO_4$); calcium aluminum silicate (such as $Al_2O_3 \cdot CaO \cdot 2SiO_2$); calcium magnesium silicate (CaMgSiO4); calcium carbonate ($CaCO_3$); zirconium oxide ($ZrO_2$); zirconium hydroxide [$ZrO(OH)_2 \cdot nH_2O$]; zirconium carbonate [$Zr(CO_3)_2$]; and crystalline aluminosilicates containing hydrogen, alkali metal, or alkaline earth metal that correct charge, such as various zeolites.

In the polymer composition of the disclosure, a blending amount of a filler containing [B] silica and [C] carbon black is preferably 30 parts by mass or more, more preferably 40 parts by mass or more, with respect to 100 parts by mass of the rubber component. The blending amount of the filler containing [B] silica and [C] carbon black is preferably 350 parts by mass or less, more preferably 200 parts by mass or less. In the case where the polymer composition of the disclosure is used for manufacturing a tire tread, if the blending amount of the filler in the polymer composition is within the above range, it is possible to achieve low rolling resistance of tires as well as high levels in braking performance on wet surfaces,

handling performance on dry surfaces, and wear resistance.

[D] Other Rubber Components

The polymer composition of the disclosure may further contain rubber components (also referred to as "[D] other rubber components") other than the modified copolymer (P). As the other rubber components, a rubber component that is at least one selected from the group consisting of natural rubber, isoprene rubber, butadiene rubber, emulsion polymerized styrene-butadiene rubber, solution polymerized styrene-butadiene rubber, hydrogenated styrene-butadiene rubber, butyl rubber, halogenated butyl rubber, and ethylene-propylene rubber, and is different from the modified copolymer (P) can be preferably used. Among them, the polymer composition preferably further contains, as [D] other rubber components, a rubber component that is at least one selected from the group consisting of natural rubber, butadiene rubber, emulsion polymerized styrene-butadiene rubber, solution polymerized styrene-butadiene rubber, and hydrogenated styrene-butadiene rubber and is different from the modified copolymer (P). When [D] other rubber components are mixed with the modified copolymer (P), the mixing may be performed during kneading using a Banbury mixer, roll or the like which is generally used, or [D] other rubber components may be used after being subjected to pre-mixing and drying while in a solution state after polymerization.

A ratio between the modified copolymer (P) and [D] other rubber components is as follows: preferably 10 to 95 parts by mass of the modified copolymer (P) and 5 to 90 parts by mass of [D] other rubber components, more preferably 20 to 90 parts by mass of the modified copolymer (P) and 10 to 80 parts by mass of [D] other rubber components, with respect to 100 parts by mass of the rubber component (the total amount of the modified copolymer (P) and [D] other rubber components).

In the disclosure, from the viewpoint of further improving dry grip performance, wet grip performance, and blowout resistance, liquid rubber can also be used for some or all of [D] other rubber components. Examples of liquid rubber include liquid polyisoprene (liquid IR), liquid polybutadiene (liquid BR), liquid styrene-butadiene copolymer (liquid SBR), and liquid ethylene-propylene copolymer (liquid EP). For example, liquid SBR having a weight average molecular weight of 1,000 to 100,000, preferably 2,000 to 80,000, can be used. The weight average molecular weight of the liquid rubber refers to a polystyrene equivalent weight average molecular weight as analyzed by a gel permeation chromatograph (GPC). The liquid rubber refers to one having fluidity at 23 °C.

[E] Silane Coupling Agent

In the disclosure, [E] silane coupling agent can be blended and the reinforcement properties of silica can be further enhanced. [E] silane coupling agent is not particularly limited, and is preferably a sulfur-containing silane coupling agent. Examples of the sulfur-containing silane coupling agent include bis(3-triethoxysilylpropyl)tetrasulfide, bis(3-triethoxysilylpropyl)disulfide, 3-trimethoxysilylpropylbenzothiazole tetrasulfide, γ-mercaptopropyltriethoxysilane, 3-octanoylthiopropyltriethoxysilane, and 3-[ethoxybis(3,6,9,12,15-pentaoxaoctacosan-1-yloxy)silyl]-1-propanethiol.

A blending amount of [E] silane coupling agent is preferably 1 to 20 parts by mass with respect to 100 parts by mass of silica. If the blending amount of [E] silane coupling agent is less than 1 part by mass, the blending amount may be too small to sufficiently obtain the effect of improving the dispersibility of silica. On the other hand, if the blending amount of [E] silane coupling agent exceeds 20 parts by mass, workability and elongation at break may decrease. The blending amount of [E] silane coupling agent is more preferably 5 to 15 parts by mass with respect to 100 parts by mass of silica. One of the silane coupling agents may be used alone or two thereof may be used in combination.

[F] Crosslinking Agent

The polymer composition of the disclosure may contain [F] crosslinking agent. By containing [F] crosslinking agent in the polymer composition of the disclosure, a crosslinked product having further improved strength and wear resistance can be obtained. Examples of the crosslinking agent include sulfur, a sulfur halide, an organic peroxide, quinone dioxime, an organic polyamine compound, an alkylphenol resin having a methylol group, in which sulfur is typically used. A blending amount of [F] crosslinking agent is preferably 0.1 to 5 parts by mass, more preferably 0.5 to 3 parts by mass, with respect to 100 parts by mass of the total amount of the rubber component contained in the polymer composition.

Process oil generally used for oil extension of elastomers may be blended into the polymer composition. The process oil is blended in the polymer composition, for example, by directly adding the oil during rubber compounding. Preferred examples of the process oil include various oils known in the art, such as aromatic oil, paraffinic oil, naphthenic oil, vegetable oil, sunflower oil, soybean oil, as well as oil (low PCA oil) having low content of polycyclic aromatic compounds, such as mild extraction solvate (MES), treated distillate aromatic extract (TDAE), special residual aromatic extract (SRAE), and heavy naphthenic oil. Examples of commercially available MES, TDAE, and SRAE include Catenex SNR (heavy paraffin dewaxed from distillate oil with solvent) produced by Shell as MES, Vivatec 500 produced by H&R

Wasag AG as TDAE, and NC140 produced by Japan Energy Corp. as SRAE. A blending amount of the process oil is preferably 10 to 100 parts by mass with respect to 100 parts by mass of the total amount of the rubber component contained in the polymer composition.

In addition to the above components, various additives generally used in a polymer composition for manufacturing rubber for tires, such as an anti-aging agent, zinc oxide, stearic acid, a plasticizer, a vulcanization accelerator, a compatibilizer, resin, a vulcanization aid, a processing aid, and a scorch inhibitor, can be blended in the polymer composition. A content ratio of these additives can be appropriately selected according to the various components without impairing the effects of the disclosure.

In the polymer composition of the disclosure, a polymer component and other components blended as necessary are kneaded using a kneading machine such as an open-type kneading machine (for example, a roll) or a closed-type kneading machine (for example, a Banbury mixer), followed by molding and machining and then crosslinking (vulcanization), thereby being applicable to various rubber products as a crosslinked product. Specifically, the crosslinked product of the disclosure can be applied to: tire applications, such as tire treads, under treads, carcasses, sidewalls, and bead portions; sealing materials, such as packings, gaskets, weatherstrips, and O-rings; interior and exterior skin materials for various vehicles such as automobiles, ships, aircraft, and trains; building materials; vibration-proof rubber for industrial machinery or equipment; various hoses, such as diaphragms, rolls, radiator hoses and air hoses, and hose covers; belts, such as power transmission belts; linings; dust boots; medical device materials; fenders; insulation materials for electric wires; and other industrial products.

According to a method for producing a modified conjugated diene polymer of the disclosure, a modified conjugated diene polymer can be obtained which is for obtaining a crosslinked product having good physical properties required for tire applications, such as wet grip performance, wear resistance and strength. Accordingly, a polymer composition containing the modified conjugated diene polymer obtained in the disclosure is particularly suitable as a material for tire treads, sidewalls, or both.

A tire can be manufactured according to a conventional method. For example, the polymer composition may be mixed in a kneading machine, formed into a sheet, and then arranged in a predetermined position (for instance, on the outside of a carcass in the case of a sidewall) according to a conventional method, subjected to vulcanization and molding, thereby being formed as tread rubber or sidewall rubber, and a pneumatic tire can be obtained.

According to the disclosure described in detail above, the following means are provided.

[1] A modified conjugated diene polymer containing: a structural unit derived from a conjugated diene compound; and a structural unit derived from an aromatic vinyl compound, in which, in the case where a glass transition temperature measured in accordance with JIS K 6240:2011 is taken as $Tg_r$ (unit: K) and a glass transition temperature obtained by formula (1) is taken as $Tg_{cl}$ (unit: K), $Tg_r$ and $Tg_{cl}$ satisfy a relationship of formula (2).

[2] The modified conjugated diene polymer as described in [1], in which a value $\theta$st (unit: mass%) calculated by formula (3) from a $^1$H-NMR spectrum measured using deuterated chloroform as a solvent is 15 to 60.

[3] The modified conjugated diene polymer as described in [1] or [2], in which a content ratio of the structural unit derived from an aromatic vinyl compound is 3 to 55 mass% with respect to a total amount of structural units constituting a polymer.

[4] The modified conjugated diene polymer as described in any one of [1] to [3], in which a vinyl bond content in the structural unit derived from a conjugated diene compound is 25 mass% or more.

[5] The modified conjugated diene polymer as described in any one of [1] to [4], having a partial structure derived from a compound having one or more elements selected from a group consisting of nitrogen, silicon, sulfur, oxygen and phosphorus.

[6] The modified conjugated diene polymer as described in any one of [1] to [5], in which the glass transition temperature measured in accordance with JIS K 6240:2011 is -20 °C or lower.

[7] A polymer composition containing: the modified conjugated diene polymer as described in any one of [1] to [6]; and at least one filler selected from a group consisting of silica and carbon black.

[8] The polymer composition as described in [7], further containing: a rubber component that is at least one selected from a group consisting of natural rubber, isoprene rubber, butadiene rubber, emulsion polymerized styrene-butadiene rubber, solution polymerized styrene-butadiene rubber, hydrogenated styrene-butadiene rubber, butyl rubber, halogenated butyl rubber, and ethylene-propylene rubber, and is different from the modified conjugated diene polymer.

[9] A crosslinked product obtained by crosslinking the polymer composition as described in [7] or [8].

[10] A tire, in which a tread, a sidewall, or both are formed using the polymer composition as described in [7] or [8].

[11] A method for producing the modified conjugated diene polymer as described in any one of [1] to [6], including: a polymerization process in which a monomer containing a conjugated diene compound and an aromatic vinyl compound is polymerized in the presence of at least one polymerization initiator selected from a group consisting of an alkali metal compound and an alkaline earth metal compound, and a potassium compound (excluding the

polymerization initiator). In the polymerization process, polymerization is initiated with a portion of a total amount of the conjugated diene compound used for polymerization as an initially charged portion, and the remaining conjugated diene compound is added over a predetermined time during polymerization to continue the polymerization.

[12] The method for producing a modified conjugated diene polymer as described in [11], in which the polymerization process is a process for obtaining a polymer having an active terminal. The method for producing a modified conjugated diene polymer further includes a modification process in which the polymer having an active terminal is reacted with a compound having one or more elements selected from a group consisting of nitrogen, silicon, sulfur, oxygen and phosphorus.

## Examples

Hereinafter, the disclosure will be specifically described based on examples. However, the disclosure is not limited to these examples. In the examples and comparative examples, "parts" and "%" are on a mass basis unless otherwise specified. Methods for measuring various physical properties of polymers and crosslinked products are shown below.

[Evaluation of Characteristics of Polymers and Crosslinked Products]

- Vinyl bond content (mass%): measured by 400 MHz $^1$H-NMR.
- Bound styrene content (mass%): measured by 400 MHz $^1$H-NMR.
- Content ratio of specific chain (mass% with respect to total styrene amount): calculated as follows using a result of $^1$H-NMR measurement at 400 MHz. From a 400 MHz $^1$H-NMR spectrum measured using deuterated chloroform as a solvent, a ratio of an integral value $\Sigma$(a) in a chemical shift range of the following (a) to a sum $\Sigma$(a, b) of integral values in chemical shift ranges of the following (a) and (b) was obtained as a percentage, which was multiplied by 2.5, and the result was taken as a content ratio $\theta$st [mass%] of a specific chain (see formula (3) below).

$$\text{(a) } 6.00 \leq \sigma < 6.89$$

$$\text{(b) } 6.89 \leq \sigma \leq 8.00$$

$$\theta st = [(\Sigma(a)/\Sigma(a, b)) \times 2.5] \times 100 \quad \text{...(3)}$$

- Weight average molecular weight (Mw) and molecular weight distribution (Mw/Mn): obtained based on a chart (GPC curve) based on a polystyrene equivalent molecular weight according to a gel permeation chromatograph (GPC). Specific measurement conditions of GPC were as follows.

(GPC Measurement Conditions)

Measurement instrument: HLC-8020 (manufactured by Tosoh)
Column: two GMHhr-H columns (manufactured by Tosoh) connected in series
Detector: Differential refractometer RI-8020 (manufactured by Tosoh)
Eluent: Tetrahydrofuran
Column temperature: 40 °C
Flow rate: 1.0 ml/min
Sample concentration: 10 mg/20 ml

- 1st peak weight average molecular weight: In the GPC curve obtained during the Mw measurement, a polystyrene equivalent weight average molecular weight was obtained for a peak with a smallest molecular weight, and the result was taken as the 1st peak weight average molecular weight.
- Mooney viscosity ($ML_{1+4}$, 100 °C): obtained in accordance with JIS K 6300-1:2013 using an L rotor under conditions of a preheating time of 1 minute, a rotor operation time of 4 minutes, and a temperature of 100 °C.
- Actual glass transition temperature $Tg_r$: A glass transition temperature was obtained from an inflection point of a DSC

curve in the range of -100 °C to 40 °C in accordance with JIS K 6240:2011. Specific measurement conditions of the glass transition temperature were as follows. Since a measurement result was obtained as Celsius temperature (°C), a measured value (value to the ones place, unit: °C) by DSC analysis was converted to Kelvin (K) units by adding 273.15, and the result was taken as the actual glass transition temperature $Tg_r$.

(DSC Measurement Conditions)

Measurement instrument: Q1000 Differential Scanning Calorimeter (DSC) (manufactured by TA Instruments)
Temperature rising rate: 10 °C/min

<Synthesis of Modified Conjugated Diene Polymer>

<Example 1>:

A nitrogen-purged autoclave reactor having an internal volume of 5 liters was charged with 2250 g of cyclohexane, 2.5 mL of tetrahydrofuran as a vinyl content regulator (randomizer), 0.06 mmol of potassium 4-dodecylbenzenesulfonate as a potassium compound, and 175 g of styrene and 150 g of 1,3-butadiene as polymerization monomers. The temperature of the contents in the reactor was adjusted to 35 °C, and 3.0 mmol of n-butyllithium was then added as a polymerization initiator to start polymerization. After it was confirmed that a polymerization conversion rate of 20% had been reached (corresponding to a point when the temperature of the contents reached 45 °C), 175 g of 1,3-butadiene (additional portion) was added into the reactor at a constant feed rate over a period of 23 minutes. The polymerization was performed under adiabatic conditions, and the maximum temperature reached 85 °C.

After it was confirmed that a polymerization conversion rate of 99% had been reached (35 minutes after the initiation of polymerization), 2.7 mmol of 3-(N,N-bis(trimethylsilyl))aminopropylmethyldiethoxysilane was added as a terminal modifying agent, and the mixture was stirred for 10 minutes. 4.40 g of 2,6-di-tert-butyl-p-cresol as an anti-aging agent was added to the polymer solution after stirring, then the mixture was subjected to desolvation by steam stripping, and to drying using a heat roll adjusted to 130 °C, thereby obtaining a modified conjugated diene polymer A-1 (hereinafter also referred to simply as "A-1").

<Example 2> to <Example 12>:

Modified conjugated diene polymers A-2 to A-12 (hereinafter each also referred to simply as "A-2" to "A-12" respectively) were obtained by the same method as in Example 1, except that the types and amounts of compounds used for polymerization were as shown in Table 1. In Example 3, 2.7 mmol of piperidine was added as an initiating terminal modifying agent together with a solvent, a polymerization monomer or the like. In Example 11, 2.7 mmol of N-(trimethylsilyl) piperazine was added as an initiating terminal modifying agent together with a solvent, a polymerization monomer or the like.

<Example 13>:

A nitrogen-purged autoclave reactor having an internal volume of 5 liters was charged with 2500g of cyclohexane, 2.8 mL of tetrahydrofuran as a vinyl content regulator, 0.06 mmol of potassium 4-dodecylbenzenesulfonate as a potassium compound, and 88 g of styrene and 75 g of 1,3-butadiene as polymerization monomers. The temperature of the contents in the reactor was adjusted to 35 °C, and 3.3 mmol of n-butyllithium was then added as a polymerization initiator to initiate polymerization. After it was confirmed that a polymerization conversion rate of 20% had been reached (corresponding to a point when the temperature of the contents reached 50 °C), 338 g of 1,3-butadiene (additional portion) was added into the reactor at a constant feed rate over a period of 35 minutes. The polymerization was performed under adiabatic conditions, and the maximum temperature reached 85 °C.

After it was confirmed that a polymerization conversion rate of 99% had been reached (45 minutes after the initiation of polymerization), 2.7 mmol of 3-(N,N-bis(trimethylsilyl))aminopropylmethyldiethoxysilane was added as a terminal modifying agent, and the mixture was stirred for 10 minutes. 4.80 g of 2,6-di-tert-butyl-p-cresol as an anti-aging agent was added to the polymer solution after stirring, then the mixture was subjected to desolvation by steam stripping, and to drying using a heat roll adjusted to 130 °C, thereby obtaining a modified conjugated diene polymer A-13 (hereinafter also referred to simply as "A-13").

<Example 14> to <Example 17>:

Modified conjugated diene polymers A-14 to A-17 (hereinafter each also referred to simply as "A-14" to "A-17" respectively) were obtained by the same method as in Example 13, except that the types and amounts of compounds used for polymerization were as shown in Table 1 or Table 2.

<Example 18>:

A nitrogen-purged autoclave reactor having an internal volume of 5 liters was charged with 2000 g of cyclohexane, 11.2 mL of tetrahydrofuran as a vinyl content regulator, 0.05 mmol of potassium 4-dodecylbenzenesulfonate as a potassium compound, and 100 g of styrene and 150 g of 1,3-butadiene as polymerization monomers. The temperature of the contents in the reactor was adjusted to 35 °C, and 2.7mmol of n-butyllithium was then added as a polymerization initiator to initiate polymerization. After it was confirmed that a polymerization conversion rate of 20% had been reached (corresponding to a point when the temperature of the contents reached 50 °C), 250 g of 1,3-butadiene (additional portion) was added into the reactor at a constant feed rate over a period of 25 minutes. The polymerization was performed under adiabatic conditions, and the maximum temperature reached 85 °C.

After it was confirmed that a polymerization conversion rate of 99% had been reached (35 minutes after the initiation of polymerization), 2.4mmol of 3-(N,N-bis(trimethylsilyl))aminopropylmethyldiethoxysilane was added as a terminal modifying agent, and the mixture was stirred for 10 minutes. 4.00 g of 2,6-di-tert-butyl-p-cresol as an anti-aging agent was added to the polymer solution after stirring, then the mixture was subjected to desolvation by steam stripping, and to drying using a heat roll adjusted to 130 °C, thereby obtaining a modified conjugated diene polymer A-18 (hereinafter also referred to simply as "A-18").

<Comparative Example 1>:

A conjugated diene polymer A-19 (hereinafter also referred to simply as "A-19") was obtained by the same method as in Example 1, except that 0.5 mL of methanol was added instead of 2.7 mmol of 3-(N,N-bis(trimethylsilyl)) aminopropylmethyldiethoxysilane. A-19 is an unmodified conjugated diene polymer. The term "(modified) conjugated diene polymer" encompasses both a modified conjugated diene polymer and an unmodified conjugated diene polymer.

<Comparative Example 2>:

A modified conjugated diene polymer A-20 (hereinafter also referred to simply as "A-20") was obtained by the same method as in Example 1, except that the types and amounts of compounds used for polymerization were as shown in Table 2. In the polymerization of Comparative Example 2, no potassium compound was added into the reactor.

<Comparative Example 3>:

A modified conjugated diene polymer A-21 (hereinafter also referred to simply as "A-21") was obtained by the same method as in Example 1, except that the types and amounts of compounds used for polymerization were as shown in Table 2 and that 175 g of 1,3-butadiene (additional portion) was added into the reactor over a period of 15 minutes during polymerization.

<Comparative Example 4>:

A modified conjugated diene polymer A-22 (hereinafter also referred to simply as "A-22") was obtained by the same method as in Example 1, except that the types and amounts of compounds used for polymerization were as shown in Table 2 and that 175 g of 1,3-butadiene (additional portion) was added into the reactor over a period of 15 minutes during polymerization. In the polymerization of Comparative Example 4, no potassium compound was added into the reactor.

<Comparative Example 5>:

A modified conjugated diene polymer A-23 (hereinafter also referred to simply as "A-23") was obtained by the same method as in Example 13, except that the types and amounts of compounds used for polymerization were as shown in Table 2 and that 128 g of 1,3-butadiene (additional portion) was added into the reactor over a period of 10 minutes during polymerization.

<Comparative Example 6>:

A modified conjugated diene polymer A-24 (hereinafter also referred to simply as "A-24") was obtained by the same method as in Example 13, except that the types and amounts of compounds used for polymerization were as shown in Table 2 and that 250 g of 1,3-butadiene (additional portion) was added into the reactor over a period of 20 minutes during polymerization. In the polymerization of Comparative Example 6, no potassium compound was added into the reactor.

[Table 1]

| | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|
| (Modified) conjugated diene polymer | | A-1 | A-2 | A-3 | A-4 | A-5 | A-6 | A-7 | A-8 | A-9 | A-10 | A-11 | A-12 | A-13 | A-14 |
| Polymerization formulation | | | | | | | | | | | | | | | |
| Solvent | | | | | | | | | | | | | | | |
| : Cyclohexane | (g) | 2250 | 2250 | 2250 | 2250 | 2250 | 2745 | 2745 | 2745 | 2745 | 2745 | 2250 | 2745 | 2500 | 3000 |
| Vinyl content regulator | | | | | | | | | | | | | | | |
| : Tetrahydrofuran | (mL) | 2.5 | 2.5 | 2.5 | 2.5 | 2.5 | 2.8 | 2.8 | 2.8 | 2.8 | 2.8 | 2.5 | 2.8 | 2.8 | 2.8 |
| Potassium compound | | | | | | | | | | | | | | | |
| : DBS-K | (mmol) | 0.06 | 0.06 | 0.06 | 0.06 | 0.06 | 0.05 | 0.05 | 0.05 | 0.05 | 0.05 | 0.06 | 0.05 | 0.06 | 0.05 |
| Polymerization monomer | | | | | | | | | | | | | | | |
| : Styrene | (g) | 175 | 175 | 175 | 175 | 175 | 158 | 158 | 158 | 158 | 158 | 175 | 158 | 88 | 88 |
| : 1,3-butadiene | (g) | 150 | 100 | 150 | 150 | 50 | 135 | 135 | 135 | 135 | 135 | 150 | 135 | 75 | 75 |
| : 1,3-butadiene (additional portion) | (g) | 175 | 225 | 175 | 175 | 275 | 158 | 158 | 158 | 158 | 158 | 175 | 158 | 338 | 338 |
| Polymerization initiator | | | | | | | | | | | | | | | |
| : n-butyllithium | (mmol) | 3.0 | 3.0 | 3.0 | 3.0 | 3.0 | 2.7 | 2.7 | 2.7 | 2.7 | 2.7 | 3.0 | 2.7 | 3.3 | 2.7 |
| Initiating terminal modifying agent | | | | | | | | | | | | | | | |
| : Piperidine | (mmol) | | | 2.7 | | | | | | | | | | | |
| :IM-1 | (mmol) | | | | | | | | | | | 2.7 | | | |
| Terminal modifying agent | | | | | | | | | | | | | | | |
| : M-1 | (mmol) | 2.7 | 2.7 | 2.7 | 2.7 | 2.7 | | | | | | | | 2.7 | |
| : M-2 | (mmol) | | | | | | 0.6 | | | | | | | | 0.6 |
| : M-3 | (mmol) | | | | | | | 0.6 | | | | | | | |
| : M-4 | (mmol) | | | | | | | | 0.6 | | | | | | |
| : M-5 | (mmol) | | | | | | | | | 1.2 | | | | | |
| : M-6 | (mmol) | | | | | | | | | | 1.2 | | | | |
| : M-7 | (mmol) | | | | | | | | | | | 0.9 | | | |

(continued)

| | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|
| : Silicon tetrachloride (mmol) | | | | 3.6 | | | | | | | | 0.6 | | |

[Table 2]

| | | Example 15 | Example 16 | Example 17 | Example 18 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| (Modified) conjugated diene polymer | | A-15 | A-16 | A-17 | A-18 | A-19 | A-20 | A-21 | A-22 | A-23 | A-24 |
| Polymerization formulation | | | | | | | | | | | |
| Solvent | | | | | | | | | | | |
| : Cyclohexane | (g) | 3000 | 3000 | 3000 | 2000 | 2250 | 2500 | 2250 | 2250 | 2200 | 2000 |
| Vinyl content regulator | | | | | | | | | | | |
| : Tetrahydrofuran | (mL) | 2.8 | 2.8 | 2.8 | 11.2 | 2.5 | 5.6 | 2.5 | 2.5 | 2.5 | 11.2 |
| Potassium compound | | | | | | | | | | | |
| : DBS-K | (mmol) | 0.05 | 0.05 | 0.05 | 0.05 | 0.06 | | 002 | | 0.07 | |
| Polymerization monomer | | | | | | | | | | | |
| : Styrene | (g) | 88 | 88 | 88 | 100 | 175 | 175 | 175 | 175 | 72 | 100 |
| : 1,3-butadiene | (g) | 75 | 75 | 75 | 150 | 150 | 200 | 150 | 150 | 200 | 150 |
| : 1,3-butadiene (additional portion) (g) | | 338 | 338 | 338 | 250 | 175 | 125 | 175 | 175 | 128 | 250 |
| Polymerization initiator | | | | | | | | | | | |
| : n-butyllithium | (mmol) | 2.7 | 2.7 | 2.7 | 2.7 | 3.0 | 2.8 | 3.0 | 3.0 | 2.6 | 2.7 |
| Initiating terminal modifying agent | | | | | | | | | | | |
| : Piperidine | (mmol) | | | | | | | | 2.7 | | |
| Terminal modifying agent | | | | | | | | | | | |
| : M-1 | (mmol) | | | | 2.4 | | 2.4 | 2.7 | 2.7 | 2.4 | 2.4 |
| : M-2 | (mmol) | | | | | | | | | | |
| : M-3 | (mmol) | 0.6 | | | | | | | | | |
| : M-4 | (mmol) | | 0.6 | | | | | | | | |
| : Silicon tetrachloride | (mmol) | | | 0.6 | | | | | | | |

In Tables 1 and 2, the abbreviations for the compounds are as follows.

·DBS-K: potassium 4-dodecylbenzenesulfonate

·IM-1: N-trimethylsilylpiperazine

·M-1: 3-(N,N-bis(trimethylsilyl)amino)propylmethyldiethoxysilane

·M-2: N-(3-dimethoxy(methyl)silyl)propyl-1-(4-(((3-(diethoxy)(methyl)silyl)propyl)imino)methyl)phenyl)methanimine

·M-3: 2,2-dimethoxy-1-(3-(trimethoxysilyl)propyl)-1,2-azosilolidene

·M-4: N-(3-(1H-imidazol-1-yl)propyl)-3-(trimethoxysilyl)-N-(3-(trimethoxysilyl)propyl)propan-1-amine

·M-5: 3-(trimethylsilylmercapto)propyltrimethoxysilane

·M-6: 3-(diphenylphosphino)propylmethyldiethoxysilane

·M-7: 1-phenyl-N-(3-(triethoxysilyl)propyl)methanimine

[Chem 8]

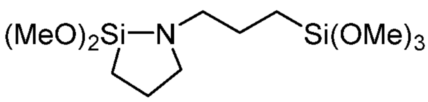

M-3

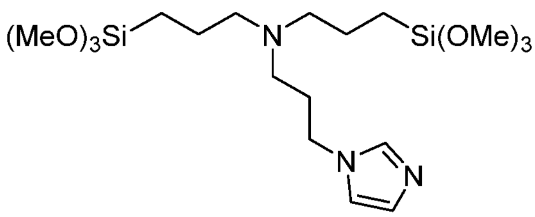

M-4

Analysis results of the (modified) conjugated diene polymers (A-1 to A-24) synthesized as described above are shown in Table 3 and Table 4. The estimated glass transition temperature $Tg_{cl}$ (unit: K) of each polymer was obtained as a value to two decimal places (rounding the third decimal place) using formula (1) above. A difference $\Delta Tg$ (= $Tg_r$ - $Tg_{cl}$) was obtained by subtracting the estimated glass transition temperature $Tg_{cl}$ from the actual glass transition temperature $Tg_r$ and rounding off the second decimal place of the value after subtraction. In Table 3 and Table 4, "number of endothermic peaks" represents the number of peaks in a differential curve obtained by DSC measurement of the (modified) conjugated diene polymer.

[Table 3]

| | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|
| (Modified) conjugated diene polvmer | A-1 | A-2 | A-3 | A-4 | A-5 | A-6 | A-7 | A-8 | A-9 | A-10 | A-11 | A-12 | A-13 | A-14 |
| Bound styrene content (wt%) | 34 | 35 | 34 | 35 | 35 | 35 | 34 | 34 | 34 | 34 | 34 | 35 | 18 | 19 |
| Vinyl bond content (wt%) | 25 | 25 | 25 | 24 | 24 | 26 | 25 | 25 | 25 | 25 | 25 | 25 | 26 | 25 |
| θst (wt% in ST) | 27 | 53 | 32 | 35 | 65 | 26 | 25 | 26 | 25 | 26 | 27 | 25 | 31 | 30 |
| 1st peak weight average molecular weight | 412,000 | 411,000 | 405,000 | 409,000 | 415,000 | 395,000 | 401,000 | 408,000 | 397,000 | 401,000 | 403,000 | 404,000 | 406,000 | 405,000 |
| Total weight average molecular weight | 321,000 | 332,000 | 312,000 | 335,000 | 338,000 | 506,000 | 542,000 | 567,000 | 405,000 | 412,000 | 43,000 | 557,000 | 271,000 | 453,000 |
| Molecular weight distribution (Mw/Mn) | 1.2 | 1.2 | 1.2 | 1.3 | 1.3 | 1.2 | 1.2 | 1.2 | 1.2 | 1.2 | 1.2 | 1.2 | 1.4 | 1.4 |
| Mooney viscosity | 109 | 114 | 120 | 116 | 117 | 162 | 171 | 175 | 130 | 126 | 145 | 172 | 109 | 165 |
| Actual measurement Tg: °C | -54 | -65 | -62 | -58 | -70 | -53 | -56 | -55 | -56 | -56 | -55 | -55 | -76 | -74 |
| Actual glass transition temperature $Tg_r$:K | 219.15 | 208.15 | 211.15 | 215.15 | 203.15 | 220.15 | 217.15 | 218.15 | 217.15 | 217.15 | 218.15 | 218.15 | 197.15 | 199.15 |
| Estimated glass transition temperature $Tg_{cl}$:K | 227.00 | 228.39 | 227.00 | 228.39 | 228.39 | 228.39 | 227.00 | 227.00 | 227.00 | 227.00 | 227.00 | 228.39 | 206.81 | 207.96 |

(continued)

| | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|
| $\Delta Tg=Tg_{r}-Tg_{cl}$ | -7.9 | -20.2 | -15.9 | -13.2 | -25.2 | -8.2 | -9.9 | -8.9 | -9.9 | -8.9 | -7.9 | -10.2 | -9.7 | -8.8 |
| Number of endothermic peaks | 1 | 1 | 1 | 1 | 1 | 1 | 1 | 1 | 1 | 1 | 1 | 1 | 1 | 1 |

[Table 4]

| | Example 15 | Example 16 | Example 17 | Example 18 | Comparative Example 1 | Comparative Example 2 | Comparative Example 3 | Comparative Example 4 | Comparative Example 5 | Comparative Example 6 |
|---|---|---|---|---|---|---|---|---|---|---|
| (Modified) conjugated diene polvmer | A-15 | A-16 | A-17 | A-18 | A-19 | A-20 | A-21 | A-22 | A-23 | A-24 |
| Bound styrene content (wt%) | 19 | 20 | 20 | 20 | 34 | 36 | 35 | 35 | 18 | 20 |
| Vinyl bond content (wt%) | 25 | 27 | 25 | 55 | 25 | 28 | 27 | 26 | 26 | 55 |
| θst (wt% in ST) | 32 | 29 | 30 | 42 | 26 | 2 | 12 | 5 | 15 | 3 |
| 1st peak weight average molecular weight | 414,000 | 398,000 | 389,000 | 395,000 | 322000 | 396,000 | 407,000 | 404,000 | 394,000 | 402,000 |
| Total weight average molecular weight | 492,000 | 520,000 | 504,000 | 309,000 | 330000 | 380,000 | 341,000 | 325,000 | 326,000 | 318,000 |
| Molecular weight distribution (Mw/Mn) | 1.4 | 1.4 | 1.4 | 1.2 | 1.1 | 1.1 | 1.1 | 1.1 | 1.2 | 1.1 |
| Mooney viscosity | 174 | 175 | 173 | 112 | 76 | 103 | 105 | 107 | 87 | 102 |
| Actual measurement Tg: °C | -76 | -73 | -73 | -74 | -54 | -32 | -46 | -33 | -61 | -52 |
| Actual glass transition temperature $Tg_r$:K | 197.15 | 200.15 | 200.15 | 199.15 | 219.15 | 241.15 | 227.15 | 240.15 | 212.15 | 221.15 |
| Estimated glass transition temperature $Tg_{cl}$:K | 207.96 | 209.13 | 209.13 | 209.13 | 227.00 | 229.80 | 228.39 | 228.39 | 206.81 | 209.13 |
| $\Delta Tg=Tg_r-Tg_{cl}$ | -10.8 | -9.0 | -9.0 | -10.0 | -7.9 | 11.4 | -1.2 | 11.8 | 5.3 | 12.0 |

(continued)

| | Example 15 | Example 16 | Example 17 | Example 18 | Comparative Example 1 | Comparative Example 2 | Comparative Example 3 | Comparative Example 4 | Comparative Example 5 | Comparative Example 6 |
|---|---|---|---|---|---|---|---|---|---|---|
| Number of endothermic peaks | 1 | 1 | 1 | 1 | 1 | 1 | 1 | 1 | 1 | 1 |

<Production of Polymer Composition and Crosslinked Product>

[Examples 1 to 12 and Comparative Examples 1 to 4]

The (modified) conjugated diene polymers A-1 to A-12 and A-19 to A-22 produced as described above were used, and polymer compositions were produced by blending each component according to the formulation shown in Table 5 below and kneading these components. The numerical values in Table 5 are in parts by mass. The kneading was performed by the following method. A Plastomill (capacity: 250 mL) equipped with a temperature control device was used. First, as the first stage of kneading, the (modified) conjugated diene polymer, butadiene rubber, silica, a silane coupling agent, carbon black, extender oil, stearic acid, an anti-aging agent, and zinc oxide were blended and kneaded under conditions of a filling rate of 72% and a rotation speed of 60 rpm. Next, as the second stage of kneading, a blend obtained as described above was cooled to room temperature, following by blending therein sulfur and a vulcanization accelerator and kneading. The obtained polymer composition was molded, and was vulcanized in a vulcanization press at 160 °C for a predetermined time to obtain a crosslinked product (vulcanized rubber). The wet grip performance, wear resistance and strength were evaluated as follows. The results are shown in Table 6.

(1) Wet grip performance (0 °C tanδ): The vulcanized rubber was used as a measurement sample, and a loss factor (tanδ (0 °C)) was measured using ARES-RDA (manufactured by TA Instruments) under conditions of a shear strain of 0.14% , an angular velocity of 100 radians per second, and 0 °C. The measurement results are shown as indices with Comparative Example 2 being set to 100. A greater numerical value indicates better wet grip performance.
(2) Wear resistance (DIN abrasion test): The vulcanized rubber was used as a measurement sample, and the wear resistance was measured in accordance with JIS K 6264 using a DIN abrasion tester (manufactured by Toyo Seiki) at 25 °C with a load of 10 N. The measurement results are shown as indices with Comparative Example 2 being set to 100. A greater numerical value indicates better wear resistance.
(3) Strength (tensile test): The vulcanized rubber was used as a measurement sample, and a tensile test was conducted in accordance with JIS K 6251:2010. Here, a No. 3 dumbbell specimen was used as a test sample, and the stress at break (TB, unit: MPa) and elongation at break (EB, unit: %) were measured at room temperature. Greater numerical values of TB and EB indicate higher breaking strength and better mechanical strength of the material. Strength is expressed by the tensile product (= (TB × EB)) and shown as an index with Comparative Example 2 being set to 100. A greater numerical value indicates higher and better strength.

[Table 5]

| Blending formulation | Number of parts |
|---|---|
| (Modified) conjugated diene polymer | 70 |
| Butadiene rubber * 1 | 30 |
| Silica *2 | 75 |
| Silane coupling agent *3 | 6 |
| Carbon black *4 | 5 |
| Extender oil *5 | 30 |
| Stearic acid | 2 |
| Anti-aging agent *6 | 1 |
| Zinc oxide | 3 |
| Vulcanization accelerator CZ-G *7 | 1.8 |
| Vulcanization accelerator D *8 | 1.5 |

(continued)

| Blending formulation | Number of parts |
|---|---|
| Sulfur | 1.5 |

*1) BR01, manufactured by ENEOS Materials
*2) ZEOSIL 1165MP, manufactured by Solvay
*3) Si75, manufactured by Evonik
*4) Diablack N330, manufactured by Mitsubishi Chemical
*5) Process oil T-DAE, manufactured by ENEOS
*6) OZONONE 6C, manufactured by Seiko Chemical
*7) Nocceler CZ-G, manufactured by Ouchi Shinko Chemical Industrial
*8) Nocceler D, manufactured by Ouchi Shinko Chemical Industrial

[Table 6]

| | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 | Comparative Example 4 |
|---|---|---|---|---|---|---|---|---|---|---|---|---|---|---|---|---|---|
| Type of (modified) conjugated diene polymer | | A-1 | A-2 | A-3 | A-4 | A-5 | A-6 | A-7 | A-8 | A-9 | A-10 | A-11 | A-12 | A-19 | A-20 | A-21 | A-22 |
| Evaluation | Wet grip performance 0 °C tanδ) | 104 | 116 | 105 | 105 | 102 | 104 | 103 | 108 | 106 | 104 | 110 | 100 | 82 | 100 | 101 | 101 |
| | Wear resistance (DIN) | 125 | 130 | 125 | 127 | 121 | 117 | 115 | 114 | 115 | 117 | 123 | 107 | 78 | 100 | 102 | 101 |
| | Strength (TB×EB) | 129 | 136 | 128 | 128 | 130 | 133 | 127 | 127 | 123 | 125 | 121 | 125 | 79 | 100 | 108 | 102 |

[Examples 13 to 17 and Comparative Example 5]

The (modified) conjugated diene polymers A-13 to A-17 and A-23 produced as described above were used, and polymer compositions were produced by blending each component according to the formulation shown in Table 5 above and kneading in the same manner as in Examples 1 to 12 and Comparative Examples 1 to 4. The obtained polymer compositions were measured for Mooney viscosity ($ML_{1+4}$, 100 °C) according to the following method, and the Mooney viscosity was expressed as an index with Comparative Example 5 being set to 100. Crosslinked products (vulcanized rubber) were produced using the obtained polymer compositions, and were evaluated in terms of wet grip performance, wear resistance and strength in the same manner as in Examples 1 to 12 and Comparative Examples 1 to 4. The measurement results are shown as indices with Comparative Example 5 being set to 100. The results are shown in Table 7.

(4) Mooney viscosity ($ML_{1+4}$, 100 °C): The polymer composition was used as a measurement sample, and the Mooney viscosity was obtained in accordance with JIS K 6300-1:2013 using an L rotor under conditions of a preheating time of 1 minute, a rotor operation time of 4 minutes, and a temperature of 100 °C. The measurement results are shown as indices with Comparative Example 5 being set to 100. A smaller numerical value indicates better workability.

[Table 7]

| | | Example 13 | Example 14 | Example 15 | Example 16 | Example 17 | Comparative Example 5 |
|---|---|---|---|---|---|---|---|
| Type of modified conjugated diene polymer | | A-13 | A-14 | A-15 | A-16 | A-17 | A-23 |
| Evaluation | Mooney viscosity ($ML_{1+4}$) | 100 | 92 | 91 | 91 | 100 | 100 |
| | Wet grip performance (0°C tanδ) | 341 | 334 | 331 | 333 | 329 | 100 |
| | Wear resistance (DIN) | 128 | 106 | 104 | 103 | 110 | 100 |
| | Strength (TB×EB) | 112 | 110 | 109 | 110 | 106 | 100 |

[Examples 18 to 23 and Comparative Examples 6 to 8]

The (modified) conjugated diene polymers A-15 and A-21 and A-23 produced as described above were used, and polymer compositions were produced by blending each component according to the formulation shown in Table 8 below and kneading in the same manner as in Examples 1 to 12 and Comparative Examples 1 to 4. Crosslinked products (vulcanized rubber) were produced using the obtained polymer compositions, and were evaluated in terms of wet grip performance, wear resistance and strength in the same manner as in Examples 1 to 12 and Comparative Examples 1 to 4. The measurement results are shown as indices with Comparative Example 6 being set to 100 for Example 18, Comparative Example 7 being set to 100 for Example 19, and Comparative Example 8 being set to 100 for Examples 20 to 23, respectively. The results are shown in Table 8.

[Table 8]

| Blending formulation | | Example 18 | Comparative Example 6 | Example 19 | Comparative Example 7 | Example 20 | Example 21 | Example 22 | Example 23 | Comparative Example 8 |
|---|---|---|---|---|---|---|---|---|---|---|
| Modified conjugated diene nolymer | Type | A-18 | A-24 | A-18 | A-24 | A-18 | A-18 | A-18 | A-18 | A-24 |
| | Part bv mass | 70 | 70 | 50 | 50 | 30 | 30 | 30 | 30 | 30 |
| Butadiene rubber *1 | Part bv mass | 0 | 0 | 0 | 0 | 20 | 20 | 20 | 20 | 20 |
| Natural rubber | Part bv mass | 30 | 30 | 50 | 50 | 50 | 50 | 50 | 50 | 50 |
| Silica *2 | Type | Silica A | Silica A | Silica B/silica C | Silica B/silica C | Silica A | Silica A | Silica A | Silica A | Silica A |
| | Part bv mass | 75 | 75 | 37.5/37.5 | 37.5/37.5 | 75 | 75 | 75 | 100 | 75 |
| Silane coupling agent *3 | Part bv mass | 6 | 6 | 6 | 6 | 6 | 6 | 6 | 6 | 6 |
| Carbon black *4 | Part bv mass | 5 | 5 | 5 | 5 | 5 | 5 | 5 | 5 | 5 |
| Extender oil *5 | Part bv mass | 30 | 30 | 30 | 30 | 30 | 25 | 20 | 20 | 30 |
| Resin *6 | Part bv mass | 0 | 0 | 0 | 0 | 0 | 5 | 10 | 30 | 0 |
| Stearic acid | Part by mass | 2 | 2 | 2 | 2 | 2 | 2 | 2 | 2 | 2 |
| Anti-aging agent *7 | Part bv mass | 1 | 1 | 1 | 1 | 1 | 1 | 1 | 1 | 1 |
| Zinc oxide | Part bv mass | 3 | 3 | 3 | 3 | 3 | 3 | 3 | 3 | 3 |
| Vulcanization accelerator CZ-G *8 | Part by mass | 1.8 | 1.8 | 1.8 | 1.8 | 1.8 | 1.8 | 1.8 | 1.8 | 1.8 |
| Vulcanization accelerator D *9 | Part by mass | 1.5 | 1.5 | 1.5 | 1.5 | 1.5 | 1.5 | 1.5 | 1.5 | 1.5 |

(continued)

| Blending formulation | | Example 18 | Comparative Example 6 | Example 19 | Comparative Example 7 | Example 20 | Example 21 | Example 22 | Example 23 | Comparative Example 8 |
|---|---|---|---|---|---|---|---|---|---|---|
| Sulfur | Part bv mass | 1.5 | 1.5 | 1.5 | 1.5 | 1.5 | 1.5 | 1.5 | 1.5 | 1.5 |
| Evaluation | | | | | | | | | | |
| Wet grip performance (0°C tanδ) | | 116 | 100 | 123 | 100 | 119 | 131 | 137 | 160 | 100 |
| Wear resistance (DIN) | | 133 | 100 | 119 | 100 | 129 | 130 | 133 | 140 | 100 |
| Strength (TB×EB) | | 134 | 100 | 124 | 100 | 117 | 120 | 121 | 120 | 100 |

*1) BR01, manufactured by ENEOS Materials
*2) Silica A: ZEOSIL 1165MP, manufactured by Solvay
Silica B: ZEOSIL Premium 200 MP, manufactured by Solvay
Silica C: ULTRASIL 360, manufactured by Evonik
*3) Si75, manufactured by Evonik
*4) Diablack N330, manufactured by Mitsubishi Chemical
*5) Process oil T-DAE, manufactured by ENEOS
*6) Sylvatraxx 4150 (polyterpene resin), manufactured by KRATON
*7) OZONONE 6C, manufactured by Seiko Chemical
*8) Nocceler CZ-G, manufactured by Ouchi Shinko Chemical Industrial
*9) Nocceler D, manufactured by Ouchi Shinko Chemical Industrial

As can be seen from the results in Table 6, the vulcanized rubber produced using the polymer compositions of Examples 1 to 12 exhibited significant improvements in wet grip performance, wear resistance and strength compared to the vulcanized rubber produced using the polymer compositions of Comparative Examples 1 to 4.
As can be seen from the results in Table 7, the vulcanized rubber produced using the polymer compositions of Examples 13 to 17 exhibited significant improvements in wet grip performance, wear resistance and strength compared to the vulcanized rubber produced using the polymer composition of Comparative Example 5. In particular, the polymer compositions of Examples 13 to 16 also exhibited improved workability.

Furthermore, as can be seen from the results in Table 8, the vulcanized rubber produced using the polymer compositions of Example 18, Example 19, and Example 20 exhibited significant improvements in wet grip performance, wear resistance and strength compared to the vulcanized rubber produced using the polymer compositions of Comparative Example 6, Comparative Example 7, and Comparative Example 8, respectively. In Examples 21 to 23 in which resin was further added, significant improvements in wet grip performance, wear resistance and strength were observed not only compared to the vulcanized rubber produced using the polymer composition of Comparative Example 8, but also compared to the vulcanized rubber produced using the polymer composition of Example 20.

From these results it can be confirmed that, according to a modified conjugated diene polymer in which an actual measurement value and an estimated value of the glass transition temperature satisfy the relationship of formula (2) above, a crosslinked product can be obtained that excels in wet grip performance and wear resistance, possesses high strength, and is good in various properties as rubber.

## Claims

1. A modified conjugated diene polymer, containing:

   a structural unit derived from a conjugated diene compound; and
   a structural unit derived from an aromatic vinyl compound, wherein
   in a case where a glass transition temperature measured in accordance with JIS K 6240:2011 is taken as $Tg_r$ (unit: K) and a glass transition temperature obtained by formula (1) is taken as $Tg_{cl}$ (unit: K), $Tg_r$ and $Tg_{cl}$ satisfy a relationship of formula (2):

   [Math 1]

   $$\frac{1}{Tg_{cl}} = \frac{W_{Ar}}{380} + \frac{1-W_{Ar}}{188} \quad \cdots (1)$$

   $$Tg_r - Tg_{cl} \leq -6.0 \quad \cdots (2)$$

   (in formula (1), $W_{Ar}$ is a mass fraction of a structural unit derived from an aromatic vinyl compound in the modified conjugated diene polymer and satisfies $0 \leq W_{Ar} \leq 1$.)

2. The modified conjugated diene polymer according to claim 1, wherein

   a value θst (unit: mass%) calculated by formula (3) from a $^1$H-NMR spectrum measured using deuterated chloroform as a solvent is 15 to 60,

   $$\theta st = [(\Sigma(a)/\Sigma(a, b)) \times 2.5] \times 100 \quad ...(3)$$

   (in formula (3), Σ(a) represents an integral value in a chemical shift range of $6.00 \leq \sigma < 6.89$, and Σ(a, b) represents a sum of integral values in chemical shift ranges of $6.00 \leq \sigma < 6.89$ and $6.89 \leq \sigma \leq 8.00$.)

3. The modified conjugated diene polymer according to claim 1, wherein
   a content ratio of the structural unit derived from an aromatic vinyl compound is 3 to 55 mass% with respect to a total amount of structural units constituting a polymer.

4. The modified conjugated diene polymer according to claim 1, wherein
   a vinyl bond content in the structural unit derived from a conjugated diene compound is 25 mass% or more.

**5.** The modified conjugated diene polymer according to claim 1, having:
a partial structure derived from a compound having one or more elements selected from a group consisting of nitrogen, silicon, sulfur, oxygen and phosphorus.

**6.** The modified conjugated diene polymer according to claim 1, wherein
the glass transition temperature measured in accordance with JIS K 6240:2011 is -20 °C or lower.

**7.** A polymer composition, containing:

the modified conjugated diene polymer according to any one of claims 1 to 6; and
at least one filler selected from a group consisting of silica and carbon black.

**8.** The polymer composition according to claim 7, further containing:
a rubber component that is at least one selected from a group consisting of natural rubber, isoprene rubber, butadiene rubber, emulsion polymerized styrene-butadiene rubber, solution polymerized styrene-butadiene rubber, hydrogenated styrene-butadiene rubber, butyl rubber, halogenated butyl rubber, and ethylene-propylene rubber, and is different from the modified conjugated diene polymer.

**9.** A crosslinked product obtained by crosslinking the polymer composition according to claim 7.

**10.** A tire, wherein
a tread, a sidewall, or both are formed using the polymer composition according to claim 7.

**11.** A method for producing the modified conjugated diene polymer according to any one of claims 1 to 6, comprising:

a polymerization process in which a monomer containing a conjugated diene compound and an aromatic vinyl compound is polymerized in the presence of at least one polymerization initiator selected from a group consisting of an alkali metal compound and an alkaline earth metal compound, and a potassium compound (excluding the polymerization initiator), wherein
in the polymerization process, polymerization is initiated with a portion of a total amount of the conjugated diene compound used for polymerization as an initially charged portion, and the remaining conjugated diene compound is added over a predetermined time during polymerization to continue the polymerization.

**12.** The method for producing a modified conjugated diene polymer according to claim 11, wherein

the polymerization process is a process for obtaining a polymer having an active terminal; and
the method for producing a modified conjugated diene polymer further comprises a modification process in which the polymer having an active terminal is reacted with a compound having one or more elements selected from a group consisting of nitrogen, silicon, sulfur, oxygen and phosphorus.

## INTERNATIONAL SEARCH REPORT

International application No.
**PCT/JP2023/028595**

**A. CLASSIFICATION OF SUBJECT MATTER**

***C08F 8/42***(2006.01)i; ***B60C 1/00***(2006.01)i; ***C08K 3/04***(2006.01)i; ***C08K 3/36***(2006.01)i; ***C08L 15/00***(2006.01)i
FI: C08F8/42; C08L15/00; C08K3/36; C08K3/04; B60C1/00 A; B60C1/00 B

According to International Patent Classification (IPC) or to both national classification and IPC

**B. FIELDS SEARCHED**

Minimum documentation searched (classification system followed by classification symbols)

C08F8/42; B60C1/00; C08K3/04; C08K3/36; C08L15/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-067987 A (JSR CORP.) 04 March 2004 (2004-03-04) claims 1-14, paragraphs [0012], [0063], [0100], [0119]-[0156], examples 9, 10, 11, 13, 14, comparative examples 6, 7 | 1-12 |
| A | JP 2017-533310 A (SOLVAY SPECIALTY POLYMERS USA, LLC) 09 November 2017 (2017-11-09) paragraph [0087] | 1-12 |
| A | JP 2022-081093 A (AGC INC.) 31 May 2022 (2022-05-31) paragraph [0008] | 1-12 |
| A | WO 2011/040312 A1 (ASAHI KASEI CHEMICALS CORP.) 07 April 2011 (2011-04-07) paragraph [0079] | 1-12 |
| A | JP 2022-028234 A (ASAHI KASEI KABUSHIKI KAISHA) 16 February 2022 (2022-02-16) paragraphs [0122]-[0173] | 1-12 |
| A | WO 2014/133097 A1 (JSR CORP.) 04 September 2014 (2014-09-04) paragraphs [0050]-[0059] | 1-12 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 October 2023** | **24 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
**PCT/JP2023/028595**

**C. DOCUMENTS CONSIDERED TO BE RELEVANT**

| Category* | Citation of document, with indication, where appropriate, of the relevant passages | Relevant to claim No. |
|---|---|---|
| A | WO 2008/114756 A1 (JSR CORP.) 25 September 2008 (2008-09-25) paragraphs [0147]-[0211] | 1–12 |

Form PCT/ISA/210 (second sheet) (January 2015)

**INTERNATIONAL SEARCH REPORT**
**Information on patent family members**

International application No.
**PCT/JP2023/028595**

| Patent document cited in search report | Publication date (day/month/year) | Patent family member(s) | Publication date (day/month/year) |
|---|---|---|---|
| JP 2004-067987 A | 04 March 2004 | US 2004/0254301 A1<br>claims 1-30, paragraphs [0015]-[0017], [0106], [0192]<br>EP 1457501 A1<br>CA 2461259 A1<br>CN 1578790 A<br>CN 1789293 A<br>KR 10-0932356 B1 | |
| JP 2017-533310 A | 09 November 2017 | US 2017/0355821 A1<br>paragraph [0105]<br>CN 107108895 A | |
| JP 2022-081093 A | 31 May 2022 | (Family: none) | |
| WO 2011/040312 A1 | 07 April 2011 | US 2012/0277369 A1<br>paragraph [0101]<br>EP 2484701 A1<br>CN 102482359 A<br>KR 10-2012-0058564 A | |
| JP 2022-028234 A | 16 February 2022 | EP 3950722 A1<br>paragraphs [0123]-[0168]<br>CN 114058096 A | |
| WO 2014/133097 A1 | 04 September 2014 | US 2015/0361210 A1<br>paragraphs [0077]-[0108]<br>EP 2963087 A1<br>CN 105026484 A<br>KR 10-2015-0122138 A | |
| WO 2008/114756 A1 | 25 September 2008 | US 2010/0130671 A1<br>paragraphs [0115]-[0174]<br>EP 2123687 A1<br>CN 101679571 A<br>KR 10-2010-0015342 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022125827 A
- WO 2008123164 A
- JP H11349632 A
- WO 2017221943 A
- JP 2002284930 A
- WO 2008123215 A
- JP 2009227858 A
- JP 2009084413 A
- JP 2011140613 A

### Non-patent literature cited in the description

- *Journal of the Society of Rubber Science and Technology*, 1961, vol. 34 (4), 246-253
- Chemical Handbook Basic. Chemical Society of Japan